# EUROPÄISCHE PATENTSCHRIFT

(11) **EP 2 870 449 B1**
(45) Veröffentlichungstag und Bekanntmachung des Hinweises auf die Patenterteilung: **07.11.2018**
(21) Anmeldenummer: 13731111.4
(22) Anmeldetag: 20.06.2013
(51) Int. Cl.: G01M 3/28

(54) **ABSPERREINRICHTUNGSÜBERPRÜFVORRICHTUNG SOWIE VERWENDUNGEN DAVON**
DEVICE FOR TESTING OF A SHUT-OFF SYSTEM AND ITS CORRESPONDING USE
DISPOSITIF POUR TESTER UN DISPOSITIF D'ARRÊT ET SON UTILISATION

(30) Priorität: 06.07.2012 DE 102012106098; 20.08.2012 DE 102012107605
(43) Veröffentlichungstag der Anmeldung: 13.05.2015
(73) Patentinhaber: Max Weishaupt GmbH, 88477 Schwendi (DE)
(72) Erfinder: GOEBEL, Daniel, 89233 Neu-Ulm (DE); SCHOCH, Reiner, 88477 Schwendi (DE)
(74) Vertreter: Kastel, Stefan
(86) Internationale Anmeldenummer: PCT/EP2013/062826
(87) Internationale Veröffentlichungsnummer: WO 2014/005843

(56) Entgegenhaltungen:
- GB-A- 2 045 446
- US-A- 5 621 164

## Beschreibung

Die Erfindung betrifft eine Absperreinrichtungsprüfvorrichtung zum Überprüfen der Dichtheit einer Absperreinrichtung für flüssige Brennstoffe, wobei die Absperreinrichtung einen Fluiddurchgang zwischen einem ersten Bereich und einem zweiten Bereich einer Fluidleitung für den mit einem Brennstoffdruck beaufschlagten flüssigen Brennstoff sperrt oder öffnet. Weiter betrifft die Erfindung eine Kombination eines Magnetventils für flüssige Brennstoffe mit einer solchen Absperreinrichtungsprüfvorrichtung. Weiter betrifft die Erfindung eine Ölfeuerungsanlage mit einem Brenner und einer mit einer Absperreinrichtung versehenen Ölleitung und mit einer Absperreinrichtungsprüfvorrichtung für die Absperreinrichtung. Schließlich betrifft die Erfindung ein Prüfverfahren zur Überprüfung der Dichtheit von Absperreinrichtungen in Brennstoffleitungen für flüssige Brennstoffe, insbesondere Öl.

Die Erfindung befasst sich insbesondere mit der Dichtheitskontrolle für Sicherheitsabsperrarmaturen an Ölbrennern.

Ventilüberwachungssysteme für gasförmige Brennstoffe sind am Markt erhältlich. Ihre Funktion wird durch eine entsprechende Normung vorgegeben, siehe z.B. EN1643 - Ventilüberwachungssysteme für automatische Absperrventile für Gasbrenner und Gasgeräte.

Obwohl auch beim Brennstoff Heizöl ein erhebliches Gefahrenpotential besteht, existiert bisher keine zu Gas vergleichbare Ventilüberwachung. Aufgrund des erheblichen Gefahrenpotentials gibt es allerdings Sicherheitsnormen, die den Einsatz von zwei Absperreinrichtungen, insbesondere Ventilen, in Reihe geschaltet vorsehen. Ein Grund dafür, dass es bisher keine Ventilüberwachung für den Brennstoff Heizöl gibt, mag in der zu Gas anderen, technisch anspruchsvolleren Ausgangssituation liegen. Da Heizöl gegenüber Gas ein inkompressibles Medium ist, das üblicherweise mit viel höherem Versorgungsdruck transportiert wird, muss eine Heizöldichtheitskontrolle auch anderen physikalischen und konstruktiven Anforderungen genügen.

Bei flüssigen Brennstoffen werden in der Regel Ventile eingesetzt, die eine Mindestdruckdifferenz zum Dichtschließen eines Ventiltellers benötigen. Aufgrund der Ventilkonstruktion kann somit zwischen zwei Sicherheitsabsperreinrichtungen für Heizöl keine zu Gasventile vergleichbare Messprozedur durchgeführt werden.

Weiter werden für Ölbrenner oft modulierende Zerstäubungssysteme eingesetzt, bei denen die Brennerhydraulik im Düsenrücklauf entgegengesetzt eingebaute Ventile verwendet. Eine Ventilprüfung müsste die Dichtwirkung von der Ringleitungsseite nachweisen. Die hier zur Verfügung stehenden Ringleitungsdrücke sind jedoch für eine Bewertung oft nicht ausreichend.

Demnach erfordert eine Dichtheitsüberprüfung von Sicherheitsabsperreinrichtungen für flüssige Brennstoffe andere Mechanismen zur Erfassung und Bewertung von Druckänderungen in nicht idealen Flüssigkeiten. In den Ölleitungen könnte Heizöl mit gelöster Luft oder auch mit ungelöster Luft vorhanden sein. Demnach kann hier ein inhomogener Stoff mit ein oder zwei Phasen und mit entsprechend unvorhersagbarem Verhalten hinsichtlich Kompressibilität oder Imkompressibilität vorliegen. Dagegen kann der Brennstoff Erdgas als quasi-idealer, einphasiger Stoff betrachtet werden. Dies erleichtert die Handhabung und Bewertung von Dichtheitskontrollen für Gasarmaturen wesentlich.

Eine Absperreinrichtungsüberprüfungsvorrichtung für gasförmige Brennstoffe ist z.B. aus der DE 23 13 048 A bekannt. Dabei dient als Absperreinrichtung ein Kugelventil, welches mittels einer Luftleitung pneumatisch gesteuert wird. Zwischen einem Einlass und einem Auslass des Kugelventils ist eine Entlastungsleitung vorgesehen, wobei eine Entlastung im Gegendruck mit der Luftleitung erfolgen kann, um einen niedrigeren Druck in der Entlastungsleitung vorzusehen. Dieser niedrigere Druck kann mittels eines Druckwächters überwacht werden, der bei Überschreiten eines Grenzdrucks ein Signal abgibt. Das System ist kompliziert und aufwändig und bedarf vieler zusätzlicher Ventile und aufwändiger Baueinheiten. Für flüssige Brennstoffe wäre dieses Ventilüberwachungssystem völlig ungeeignet.

Aus der DE 12 27 182 A ist ein Verfahren zur Dichtheitsprüfung von in einer Brennstoffleitung hintereinander geschalteten, elektrisch zu betätigenden Brennstoffabsperrvorrichtungen bekannt. Auch hier werden Absperreinrichtungen in einer Gasleitung auf Dichtheit überwacht. Das Verfahren sieht ein erstes Ventil und ein in Reihe dahintergeschaltetes zweites Ventil mit einem Druckschalter dazwischen vor. Das Verfahren läuft derart, dass zunächst das erste Ventil geschlossen wird und das zweite Ventil geöffnet wird, um die Rohrleitung dazwischen drucklos zu schalten. Dann wird das zweite Ventil geschlossen und der Druck überwacht. Spricht hier der Druckschalter an, kann man davon ausgehen, dass das erste Ventil undicht ist. Zum Messen des nachgeschalteten zweiten Ventils wird das erste Ventil bei geschlossenem zweiten Ventil kurzzeitig geöffnet, bis der Druckschalter schaltet. Anschließend wird das erste Ventil geschlossen und eine Zeitspanne lang gewartet. Schaltet während dieser Zeitspanne der Druckschalter ab, kann man davon ausgehen, dass das nachgeschaltete zweite Ventil undicht ist. Schaltet der Druckschalter nicht ab, kann man von einer Dichtheit des nachgeschalteten zweiten Ventils ausgehen. Die Dichtheitsüberprüfung wird vor dem Starten des Gasbrenners automatisch durchgeführt.

Aus der GB 1 421 815 A ist eine Absperreinrichtungsprüfvorrichtung zum Überprüfen der Dichtheit einer Absperreinrichtung für gasförmige Brennstoffe bekannt, wobei die Absperreinrichtung einen Gasdurchlass zwischen einem ersten Bereich und einem zweiten Bereich einer Gasbrennstoffleitung für den mit einem Brennstoffdrucker beaufschlagten gasförmigen Brennstoff sperrt oder öffnet. Hierzu wird eine Gasleitungsstrecke zwischen zwei Gasventilen als Messvolumen herangezogen. Es wird eine Vakuumpumpe vorgeschlagen, die die Gasleitungsstrecke zwischen den beiden zu überprüfenden Ventilen evakuiert, bis ein an die zu evakuierende Gasleitungsstrecke im Zwischenraum zwischen den beiden zu überprüfenden Ventilen angeschlossener Druckschalter anspricht. Anschließend wird eine vorbestimmte Zeit gewartet. Gibt der Druckschalter dabei weiterhin das Signal ab, heißt dies, dass das Vakuum erhalten bleibt und beide die Gasleitungsstrecke abschließende Ventile dicht sind. Es ist in der GB 1 421 815 A am Ende auch erwähnt, dass, obwohl die dort beschriebene Erfindung speziell unter Bezugnahme auf Gasbrenner beschrieben worden sei, diese Erfindung auch gleichfalls auf Öl- oder Zweistoffbrenner anwendbar sein soll. Wie eine Ölleitung jedoch mit einer Vakuumpumpe so evakuiert werden soll, dass ein Druckschalter anspricht und somit die Dichtheit von Ventilen überprüft werden könnte, ist in der GB 1 421 815 A nicht ausführbar offenbart.

Aus der DE 38 18 859 A1 ist eine Sicherheitsabsperreinrichtung bekannt, wobei in einem Gehäuse ein erster Ventilsitz, der durch ein erstes Magnetventil absperrbar ist, und ein zweiter Ventilsitz, der durch ein zweites Magnetventil absperrbar ist, derart angeordnet sind, dass Anschlüsse für einen Gasvorlauf und einen Gasrücklauf auf einer Linie angeordnet sind. Dadurch ist eine Sicherheitsabsperreinrichtung zum Einbau in Gasleitungen im Zusammenhang mit Gasbrennern offenbart. Der Raum zwischen den beiden Ventilsitzen kann über ein pneumatisches Ventil mit der Umgebung verbunden werden, um so durch ein leckendes Ventil eintretendes Gas abzuleiten. Es ist beschrieben, dass anstelle dieses Ventils, das zum Abführen einer Leckströmung vorgesehen ist, auch ein Druckfühler eingesetzt werden könnte, der etwaige Undichtigkeiten eines ersten Sitzventils erkennen soll. Auch in der DE 38 18 859 A ist erläutert, dass derartige Sicherheitsabsperreinrichtungen, die bevorzugt in Druckgasleitungen Anwendungen finden, in gleicher Weise in flüssigkeitsführenden Leitungen eingesetzt werden könnten; wie aber in flüssigkeitsführenden Leitungen eine Dichtheit einer Absperreinrichtung sicher überprüft werden könnte, ist auch hier nicht näher beschrieben.

Aus der DE 102 47 167 A1 ist eine weitere Absperreinrichtungsprüfvorrichtung zum Überprüfen der Dichtheit einer Absperreinrichtung für gasförmige Brennstoffe beschrieben, bei der die Absperreinrichtung einen Gasdurchgang zwischen einem ersten Bereich und einem zweiten Bereich einer Gas-Brennstoffleitung für einen mit einem Brennstoffdruck beaufschlagten gasförmigen Brennstoff sperrt oder öffnet, wobei eine Gasleitung zwischen zwei zu überprüfenden Gasventilen als Messvolumen verwendet wird, an welches ein Drucksensor angeschlossen ist. Der Drucksensor ist zum Erfassen einer Druckänderung ausgelegt. Dabei wird das Volumen des Messvolumens - also der Leitung zwischen den beiden zu überprüfenden Ventilen - in eine Auswerteeinrichtung eingegeben. Die Druckänderung wird durch diesen vorgegebenen Wert des Messvolumens dividiert, um so Aussagen über die Leckraten treffen zu können. Das Überprüfungsverfahren gemäß dieser bekannten Absperreinrichtungsprüfvorrichtung erfolgt derart, dass zunächst das Messvolumen mit unter Brennstoffdruck stehendem Gas befüllt wird und dann im geschlossenen Zustand der beiden Ventile eine Druckänderung erfasst wird. Fällt hier der Druck innerhalb des Messvolumens ab, dann wird auf Undichtigkeit des stromabwärts liegenden Ventils geschlossen. Liegt die Druckänderung jedoch unterhalb einer Warnschwelle, dann wird das zweite, stromabwärtige Ventil geöffnet, um den Druck innerhalb des Messvolumens zu verringern. Danach wird erneut eine Druckänderung innerhalb des Messvolumens erfasst. Steigt der Druck dann an, wird auf Undichtigkeit des ersten, stromaufwärtigen Ventils geschlossen.

Aus der DE 79 08 038 U1 ist ein Dichtigkeitskontrollgerät bekannt, das in einem zentralen Gehäuse eine Pumpe als Druckerzeuger und einen Differenzdrucksensor aufweist. Der Eingangsanschluss und der Ausgangsanschluss des Dichtigkeitskontrollgeräts liegen koaxial auf einer Linie. Dieses Dichtigkeitskontrollgerät wird mit seinem Eingangsanschluss an eine Gasleitung, die gasförmigen Brennstoff liefert, angeschlossen und mit seinem Ausgangsanschluss an eine Leitungsstrecke einer Gasleitung zwischen zwei zu überprüfenden Ventilen angeschlossen. Diese Gasleitung zwischen den beiden zu überprüfenden Ventilen dient zusammen mit einer Rohrleitung zwischen der Gasleitung und dem Ausgangsanschluss als Messvolumen. Dieses Messvolumen wird mittels der in dem Dichtigkeitskontrollgerät enthaltenen Pumpe mit einem erhöhten Prüfdruck beaufschlagt und anschließend mittels des Druckwächters, der den Differenzdruck zwischen dem Druck auf der Gaszuleitung und dem Messvolumen erfasst, überprüft. Somit ist eine Absperreinrichtungsprüfvorrichtung zum Überprüfen der Dichtheit einer Absperreinrichtung für gasförmige Brennstoffe offenbart, wobei die Absperreinrichtung einen Gasdurchgang zwischen einem ersten Bereich und einem zweiten Bereich einer Gas-Brennstoffleitung für den mit einem Brennstoffdruck beaufschlagten gasförmigen Brennstoff sperrt oder öffnet, wobei die Absperreinrichtungsprüfvorrichtung umfasst: eine durch die Gasleitung und die Rohrleitung gebildete Messkammer, die in dem Gasdurchgang zwischen einer ersten Absperreinrichtung und einer eine Schließeinrichtung bildenden zweiten Absperreinrichtung definiert ist und durch Schließen der Absperreinrichtung von dem ersten Bereich und durch Schließen der Schließeinrichtung von dem zweiten Bereich trennbar ist, eine Druckerzeugungseinrichtung, die an die Messkammer zur Beaufschlagung von in der Messkammer befindlichem Fluid mit einem erhöhten Prüfdruck, der größer als der Brennstoffdruck sein muss, angeschlossen ist und einer Druckerfassungseinrichtung zur Erfassung einer Druckänderung in der Messkammer.

Aus der GB 2 045 446 A und der US 5 621 164 A sind Vorrichtung zum Überprüfen der Dichtheit von Gasventilen bekannt. Bei der GB 2 045 446 A ist hierzu eine Pumpe als Druckerzeuger zum Erzeugen eines Prüfdrucks zwischen einem Paar von Ventilen vorgesehen. Bei der US 5 621 164 A wird ein Prüfdruck zum Testen der Dichtheit eines Paars Gasventilen mittels einer sekundären Gasversorgungsleitung erzeugt.

Alle vorbekannten Systeme betreffen Ventilüberwachungen für Gasventile. Gasförmige Brennstoffe, wie z.B. Erdgas, haben jedoch in der Regel bezogen auf das gleiche Volumen einen weitaus geringeren Energieinhalt als flüssige Brennstoffe wie insbesondere Heizöl.

Entsprechende Normen, die maximal zulässige Leckraten vorschreiben (DIN EN 13611: 2007 für Gas und ISO 23553-1.2009 für Öl) sehen eine maximale Leckrate von 20 cm³/h für Gasmagnetventile mit einer Nennweite von 25 > DN > 80 und einen Grenzwert von 40 cm³/h als Leckrate für Gasmagnetventile mit einer Nennweite von 80 > DN > 150 vor. Die entsprechenden Grenzleckraten würden einer Energie von nur 0,2 W bzw. 0,4 W entsprechen. Für Ölmagnetventile mit einem Nenndurchmesser von bis zu 10 mm ist dagegen eine maximale Leckrate von nur 1 cm³/h Prüfmedium vorgesehen, was aber bei Heizöl bereits einer Energiemenge von 10 W entsprechen würde, und bei Ölmagnetventilen mit einer Nennweite von 10 > DN > 25 ist eine maximale Leckrate von 2 cm³/h Prüfmedium vorgesehen, was bei Heizöl bereits einer Energie von 20 W entsprechen würde.

Bei Ölmagnetventilen müssen demnach weitaus geringere maximale Leckraten eingehalten werden; dennoch ist das rein vom Energieinhalt her gesehene Gefährdungspotential weitaus größer als bei Gasventilen.

Eine automatische Sicherheitskontrolle müsste daher bei flüssigen Brennstoffen, wie z.B. Öl, weitaus genauer arbeiten als bisher bekannte Gasventilüberwachungssysteme.

Die Erfindung hat sich demnach zur Aufgabe gestellt, eine Dichtheitskontrolle für Sicherheitsabsperrarmaturen an mit flüssigen Brennstoffen arbeitenden Brennern, wie insbesondere Ölbrennern, zu schaffen, die genau und sicher arbeitet.

Gemäß bevorzugter Ausgestaltung soll eine Heizöl-Ventilüberwachung mit dem Ziel geschaffen werden, gleiche Sicherheitsstandards zu ermöglichen, wie sie schon seit langem durch Ventilüberwachungssysteme für gasförmige Brennstoffe bestehen.

Zum Lösen dieser Aufgabe schlägt diese Erfindung eine Absperreinrichtungsprüfvorrichtung mit den Merkmalen des Anspruches 1 vor.

Weiter ist eine Kombination einer derartigen Absperreinrichtungsvorrichtung mit einem Magnetventil als Absperreinrichtung zur Nutzung im Brennstoffzulauf oder Brennstoffablauf einer Ölfeuerungsanlage vorgesehen.

Gemäß einem weiteren Aspekt der Erfindung wird eine Ölfeuerungsanlage mit einer solchen automatischen Absperreinrichtungsprüfvorrichtung vorgeschlagen.

Gemäß einem weiteren Aspekt der Erfindung wird ein Prüfverfahren mit den Schritten des nebengeordneten Anspruches vorgeschlagen.

Vorteilhafte Ausgestaltungen der Erfindung sind Gegenstand der Unteransprüche.

Die Erfindung schafft eine Absperreinrichtungsprüfvorrichtung zum Überprüfen der Dichtheit einer Absperreinrichtung für flüssige Brennstoffe, wobei die Absperreinrichtung einen Flüssigkeitsdurchgang zwischen einem ersten Bereich und einem zweiten Bereich einer Flüssig-Brennstoffleitung für den mit einem Brennstoffdruck beaufschlagten flüssigen Brennstoff automatisch sperrt oder öffnet, wobei die Absperreinrichtungsprüfvorrichtung umfasst:
eine Messkammer, die in dem Flüssigkeitsdurchgang zwischen der Absperreinrichtung und einer Schließeinrichtung definiert ist und durch Schließen der Absperreinrichtung von dem ersten Bereich und durch Schließen der Schließeinrichtung von dem zweiten Bereich trennbar ist,
eine Druckerzeugungseinrichtung, die an die Messkammer zur Beaufschlagung von in der Messkammer befindlichem Fluid mit einem Prüfdruck, der kleiner als der Brennstoffdruck ist, angeschlossen ist, und
eine Druckerfassungseinrichtung zur Erfassung einer Druckänderung in der Messkammer.

Die Messkammer hat ein definiertes Messvolumen kleiner als 100 ml, die durch die Druckerzeugungseinrichtung mit einem erhöhten Prüfdruck, also höher als Umgebungsdruck, beaufschlagbar ist.

Vorzugsweise ist die Absperreinrichtungsprüfvorrichtung dazu ausgebildet, die Dichtheitskontrolle automatisch durchzuführen.

Es ist bevorzugt, dass eine Auswerteeinrichtung dazu ausgebildet ist, ein Signal abzugeben, wenn die Druckerfassungseinrichtung bei geschlossener Absperreinrichtung und geschlossener Schließeinrichtung eine Druckänderung erfasst.

Es ist bevorzugt, dass die Auswerteeinrichtung dazu ausgebildet ist, bei einem Druckanstieg in der Messkammer ein erstes Signal und bei einem Druckabfall ein davon unterschiedliches zweites Signal zu erzeugen.

Es ist bevorzugt, dass das Volumen der Messkammer kleiner als ca. 50 ml und mehr insbesondere zwischen ca. 20 ml und ca. 1 ml beträgt.

Vorzugsweise ist das maximale Volumen der Messkammer das 1 bis 5fache der zulässigen Leckagemenge für Magnetventile nach DIN ISO 2355-1, die derzeit 1cm³/h bis 2cm³/h ab 10<DN<25 vorschreibt. Demnach wäre das maximale Volumen der Messkammer etwa 1cm³ bis 10cm³. Je kleiner das Messvolumen, desto kürzer ist die erforderliche Prüfzeit und desto geringer sind Temperatureinflüsse.

Es ist bevorzugt, dass die Druckerzeugungseinrichtung eine Pumpe zur Erhöhung des Drucks von innerhalb der Messkammer befindlichen Fluids umfasst. Z.B. kann die Pumpe eine externe Pumpe zum Liefern von Prüfflüssigkeit in die Messkammer sein oder auch eine an der Absperreinrichtung vorgesehene, z.B. an einem Gehäuse integrierte Pumpe, mit Tank für Prüföl oder dergleichen Prüfflüssigkeit sein.

Es ist bevorzugt, dass die Druckerzeugungseinrichtung ein Druckreglerventil und/oder eine Überströmung mit Regelung zum Einleiten von unter Druck stehendem Fluid, insbesondere Prüffluid, in die Messkammer, bis der Druck in der Messkammer den Prüfdruck erreicht, umfasst.

Vorzugsweise wird eine Prüfflüssigkeit mit bekannten Eigenschaften verwendet. Dies ist insbesondere zur Prüfung von Brennstoffen, die mit schwankenden physikalischen Eigenschaften geliefert werden, vorteilhaft. Z.B. sind die physikalischen Eigenschaften wie Dichte, Viskosität, Gasgehalt und damit Kompressibilität von schwerem Heizöl starken Schwankungen unterlegen, so dass eine Messung mit einem solchen Brennstoff als Prüfmedium eventuell zu Ungenauigkeiten und Abweichungen führen könnte. Wird dagegen ein Brennstoff mit weitgehend gleich bleibenden Eigenschaften - wie z.B. Heizöl extra leicht (gute Qualität) verwendet, kann die Prüfung auch unmittelbar mit dem Brennstoff als Prüfmedium in der Messkammer mit großer Genauigkeit erfolgen.

Es ist erfindungsgemäß vorgesehen, dass die Absperreinrichtung ein Ventil mit einem Ventilkolben zum Verschließen der Messkammer an einem ersten Ende umfasst und/oder dass die Schließeinrichtung ein Schließelement, insbesondere einen Schließkolben, zum Verschließen der Messkammer an einem zweiten Ende umfasst. Alternativ wäre als Schließelement auch eine Membran, z.B. mit integriertem Dichtelement, vorstellbar.

Vorzugsweise ist das Schließelement kein weiteres Stellventil, sondern ein eigens für die Dichtheitsprüfung des zugeordneten Ventils, vorzugsweise in dem gleichen Gehäuse vorgesehenes Schließelement.

Vorzugsweise hat das Schließelement eine Schließelement-Dichtung, die sich von der Art und Bauart von einer Dichtung des zu überprüfenden Ventils unterscheidet. Besonders bevorzugt ist die Dichtwirkung des Schließelements unterschiedlich zu der Dichtwirkung des Ventils. Vorzugsweise ist die Materialpaarung am Schließbereich des Schließelements unterschiedlich zu der Materialpaarung am Schließbereich des zu überprüfenden Ventils. Vorzugsweise ist das Schließelement für eine bessere Dichtwirkung als das Ventil ausgelegt. Vorzugsweise weist das Schließelement eine Metalldichtung auf, während ein Dichtelement eines zu überprüfenden Ventils ein Elastomer aufweist. Vorzugsweise ist das Schließelement mit einer höheren Stellkraft als das zu überprüfende Ventil verschließbar.

Es ist bevorzugt, dass der Schließkolben mittels eines durch die Druckerzeugungseinrichtung unter Druck gesetzten Mediums und/oder durch eine weitere Druckerzeugungseinrichtung betätigbar ist. Zum Beispiel können eine erste Druckerzeugungseinrichtung zum Erzeugen des Prüfdrucks und eine zweite Druckerzeugungseinrichtung zum Betätigen des Schließkolbens vorgesehen sein. Beispielsweise könnten zwei getrennte Pumpen vorhanden sein. Alternativ könnten eine Druckmediumquelle und ein Regelventil zum Liefern des Mediums zum Betätigen des Schließelements und/oder zum Liefern des Prüfdrucks vorgesehen sein. Das Schließelement, wie insbesondere ein Schließkolben, kann z.B. hydraulisch, pneumatisch oder elektromagnetisch oder motorisch (z.B. über eine Spindel) betätigt werden.

Vorzugsweise ist das Schließelement in seine Offenstellung vorgespannt. Beispielsweise ist ein Schließkolben mit einer Rückholfeder als mechanische Vorspanneinrichtung versehen. Eine Kolbenöffnung mittels mechanischer Vorspannung wie insbesondere mittels Feder hat Vorteile hinsichtlich der Sicherheit. Bei Ausfall von Hilfsenergie(n) erfolgt immer eine Öffnung der Schließeinrichtung, so dass die Brennstoffleitungen genauso zur Verfügung stehen, wie wenn keine Absperreinrichtungsprüfvorrichtung vorhanden wäre. Dies sieht insbesondere ein vorteilhaftes Sicherheitskonzept insbesondere bei im Rücklauf angeordneten Absperreinrichtungen vor. Würden diese ungewollt blockieren, könnte insbesondere bei einem Brennerstart zu viel Brennstoff zu dem Brenner gelangen, was aus Sicherheitsgründen möglichst zu vermeiden ist.

Es ist bevorzugt, dass die Absperreinrichtung ein Ventil mit einem Ventilgehäuse ist, das mit einem ersten Anschluss an den ersten Bereich und mit einem - vorzugsweise kollinear mit dem ersten Anschluss angeordneten - zweiten Anschluss an den zweiten Bereich anschließbar ist, wobei die Messkammer in oder seitlich zu dem Ventilgehäuse in Bezug auf die Fließrichtung durch wenigstens einen der Anschlüsse gesehen zwischen dem ersten und dem zweiten Anschluss angeordnet ist.

Es ist bevorzugt, dass die in Axialrichtung der kollinear angeordneten Anschlüsse im Bereich der Anschlüsse gemessene Länge des Ventilgehäuses zwischen 20 und 300 mm und insbesondere zwischen 60 mm und 120 mm und mehr insbesondere zwischen 70 und 85 mm beträgt. Möglichst soll die Länge Ventilgehäuse des mit Prüfvorrichtung versehenen Ventils der Länge des Orginalventilgehäuses entsprechen. Dies ist für eine Nachrüstung bestehender Ölfeuerungsanlagen vorteilhaft. So können zunächst noch Ölfeuerungsanlagen mit nicht-überwachten Ventilen geliefert und verbaut werden, wobei diese Ventile auch im Nachhinein einfach durch überwachte Ventile, z.B. einfach durch Austausch der Ventilgehäuse unter Beibehaltung möglichst vieler weiterer Ventilteile, ersetzt werden können.

Weiter schlägt die Erfindung eine Kombination aus einer Absperreinrichtungsprüfvorrichtung gemäß der vorstehend benannten Art mit einem Magnetventil als Absperreinrichtung in einer Ölfeuerungsanlage, vorzugsweise zur Nutzung im Brennstoffzulauf - d.h. z.B. im Vorlauf - oder Brennstoffablauf - d.h. z.B. im Rücklauf - der Ölfeuerungsanlage, vor. Es sind Ölfeuerungsanlagen in unterschiedlichen hydraulischen Anordnungen nach Norm EN 267 denkbar. Eine Ventilprüfung wäre für alle derartige Ölfeuerungsanlagen möglich.

Vorzugsweise ist eine Ölfeuerungsanlage mit einer derartigen Absperreinrichtungsprüfvorrichtung versehen. Eine bevorzugte Ölfeuerungsanlage hat eine Steuerung, die dazu ausgebildet ist, - z.B. vor einem Startvorgang eines Brenners der Ölfeuerungsanlage - die Dichtheit einer Absperreinrichtung in einer Ölleitung mittels der Absperreinrichtungsprüfvorrichtung durchzuführen und bei Eingang eines eine Leckage anzeigenden Signals der Auswerteeinrichtung ein Starten des Brenners zu verhindern.

Anstelle der Durchführung einer Dichtheitsprüfung unmittelbar vor jedem Startvorgang könnte auch eine Dichtheitsprüfung im Anschluss an das Ende eines Brennerbetriebs durchgeführt werden. Dies liegt zeitlich aber auch vor dem (nächsten) Startvorgang.

Gemäß eines weiteren Aspekts schafft die Erfindung ein Prüfverfahren zur Überprüfen der Dichtheit einer Absperreinrichtung, die in einer Brennstoffleitung für flüssigen Brennstoff vorgesehen ist und mit einem ersten Anschluss an einen ersten Bereich und mit einem zweiten Anschluss an einen zweiten Bereich der Brennstoffleitung angeschlossen ist, wobei der Brennstoff in dem ersten Bereich mit einem Brennstoffdruck zu der Absperreinrichtung geliefert wird und der zweite Bereich bei geöffneter Absperreinrichtung zur Weiterleitung des Brennstoffes von der Absperreinrichtung weg dient, mit den Schritten:
a) Vorsehen eines definierten Messvolumens kleiner als ca. 100 ml zwischen dem ersten und dem zweiten Anschluss,
b) Absperren des Messvolumens mit der Absperreinrichtung einenends und mit einer Schließeinrichtung anderenends,
c) Erzeugen eines Prüfdrucks in dem definierten Messvolumen, der höher als Umgebungsdruck, aber kleiner als der Brennstoffdruck ist,
d) Überwachen einer Druckänderung in dem Messvolumen,
e) Bewerten der Dichtheit anhand der erfassten Druckänderung.
Erfindungsgemäß ist vorgesehen, dass als Schließeinrichtung kein weiteres Stellventil, sondern ein eigens für die Dichtheitsprüfung eines Ventils, vorzugsweise in dem gleichen Gehäuse, vorgesehenes Schließelement verwendet wird.

Es ist bevorzugt, dass Schritt a) Absperren des Messvolumens mittels der Absperreinrichtung von dem ersten Bereich und Absperren des Messvolumens mittels der Schließeinrichtung von dem zweiten Bereich umfasst, und
dass in Schritt e) bei einem Druckanstieg in dem Messvolumen eine Undichtigkeit im Bereich der Absperreinrichtung festgestellt wird, bei einem Druckabfall eine Undichtigkeit im Bereich der Schließeinrichtung festgestellt wird und bei keiner festgestellten Druckänderung eine Dichtheit der Absperreinrichtung festgestellt wird.

Bei dem Prüfverfahren ist bevorzugt, dass unterschiedliche Dichtstellen an dem Ventil überprüft werden. Vorzugsweise ist hierzu weiter vorgesehen, dass als eine erste Grenzstelle oder erste Dichtstelle ein Originalventilsitz, der mit einer weichdichtenden Dichtung, z.B. aus PTFE, abgedichtet ist überprüft wird. Vorzugsweise ist hierzu weiter vorgesehen, dass zwischen dem Originalventilsitz und der Schließvorrichtung ein definierter Messraum gebildet wird. Vorzugsweise ist hierzu noch weiter vorgesehen, dass durch einen hydraulischen Kolben der definierte Messraum von unten her abgeschlossen wird. Bei einer Weiterbildung dieser Idee ist vorgesehen, dass der Abschluss durch den Kolben als zweite Dichtstelle überprüft wird, die als Referenzsitz herangezogen wird, um die Qualität der Dichtheit des Originalventilsitzes mit einer Referenz zu vergleichen. In einer Weiterbildung dieser Idee ist vorgesehen, dass ein Referenzsitz ausgewählt wird, der hinsichtlich der Dichtheit deutlich höheren Anforderungen als die zu überprüfende erste Dichtstelle erfüllt.

Gemäß einem weiteren Aspekt der Erfindung ist ein Betriebsverfahren zum Betreiben einer Ölfeuerungsanlage vorgesehen, wobei das Betriebsverfahren als Teil eines Startvorgangs die Durchführung des vorstehend genannten Prüfverfahrens vorsieht.

Ergibt dieses Prüfverfahren eine Undichtigkeit im Bereich der Absperreinrichtung, wird ein Starten eines mit dem flüssigen Brennstoff zu versorgenden Brenners verhindert.

Mit der Erfindung oder deren vorteilhaften Ausgestaltungen lässt sich vorzugsweise ein automatisches Ventilüberwachungssystem für automatische Heizöl-Sicherheitsabsperrventile schaffen, die nach ISO 23553-1 oder EN 264, Ausgabe 1991 ausgebildet sind. Es wird für weitere Einzelheiten zu den Anforderungen an derartige Sicherheitsabsperrventile auf die vorgenannten Normen verwiesen.

Vorzugsweise wird eine Ventil-Prüfeinheit geschaffen, die die Originalanschlussgeometrie eines handelsüblichen Ventiloberteils erhält. Durch die Nutzung der für übliche Sicherheitsabsperrventile gebräuchlichen Maße lassen sich bisherige Sicherheitsabsperrventile einfach durch Ventile ersetzen, die mit einer erfindungsgemäßen Absperreinrichtungsüberprüfvorrichtung versehen sind.

Gemäß einer bevorzugten Ausgestaltung wird eine Messkammer mit hydraulischem Schließkolben und Messzugang in die Messkammer hinein integriert. Vorzugsweise ist die Messkammer in einem Ventilgehäuse integriert. Zum Schaffen einer Auswerteeinheit werden beispielsweise bisher auf dem Markt verfügbare und z.B. von der Fa. Weishaupt eingesetzte elektronische Auswerteeinheiten in ihrer Funktion um eine Ventildichtheitskontrolle bei Heizölbetrieb erweitert. Dies erfolgt z.B. durch eine Ergänzung der Auswerteeinheiten mittels entsprechender zusätzlicher Software.

Eventuell sind entsprechende Brenner, wie sie von der Firma Weishaupt bereits auf dem Markt erhältlich sind, an die neuen Ventile mit Absperreinrichtungsüberprüfungsvorrichtung und sich daraus eventuell ergebende ändernde hydraulische Abstimmungen anzupassen.

Bei einer bevorzugten Ausgestaltung wird bei einer Dichtheitskontrolle z.B. ein zu prüfendes Magnetventil geschlossen. Eingangsseitig steht z.B. über einen Ventilkolben des Magnetventils ein eingestellter Vorlaufdruck, der z.B. 30 bar erreichen kann, an. Brennstoffdrücke von bis zu ca. 30 bar werden z.B. für den Zerstäubungsdruck angewandt.

Insbesondere lassen sich mit der Dichtheitskontrolle unterschiedliche Dichtstellen an dem Ventil überprüfen. Beispielsweise ist eine erste Grenzstelle oder erste Dichtstelle ein Originalventilsitz, der mit einer weichdichtenden Dichtung, z.B. aus PTFE, abgedichtet ist. Zwischen dem Originalventilsitz und der Schließvorrichtung wird ein definierter Messraum gebildet. Die Schließvorrichtung weist hierzu beispielsweise einen hydraulischen Kolben auf, der den definierten Messraum von unten her abschließt. Dieser Abschluss bildet eine zweite zu überprüfende Dichtstelle, die auch als Referenzsitz bezeichnet werden kann. Vorzugsweise genügt der Referenzsitz hinsichtlich der Dichtheit deutlich höheren Anforderungen als die zu überprüfende erste Dichtstelle. Somit kann im Prinzip ein Dichtheitsvergleich zweier Dichtstellen innerhalb einer vorgegebenen Prüfzeit erfolgen.

Es wird dann ein Prüfdruck angelegt, der deutlich geringer als der eingangsseitige Brennstoffdruck ist. Zum Beispiel wird ein Prüfdruck von 15 bar im Messraum aufgebaut. Anschließend wird eine Druckänderung, beispielsweise durch einen Drucksensor, in dem Messraum überprüft. Hierzu wird beispielsweise die Druckänderung in dem definierten Messvolumen über ein definiertes Zeitintervall bewertet.

Beispielsweise kann hierzu folgende Auswertematrix verwendet werden:

**Tabelle 1**

| **Ergebnis** | **Ursache** | |
|---|---|---|
| | Ventilsitz (Dichtstelle 1) | Referenzsitz (Dichtstelle 2) |
| Druckabfall im Messvolumen | dicht | undicht |
| Druckanstieg im Messvolumen | undicht | dicht |
| Keine Druckänderung im Messvolumen | dicht | dicht |
| | *undicht* **)* | *undicht* **)* |

| | | |
|---|---|---|
| *) abfließende Ölmenge musste identisch zur zu- bzw. nachfließenden Ölmenge in den Messraum sein = extrem unwahrscheinlich. | | |

Insbesondere wird ein möglichst kleines Messvolumen zur Messung herangezogen und die Druckänderung darin festgestellt. Je kleiner das Messvolumen, umso geringer ist der Einfluss von Inhomogenitäten in dem flüssigen Brennstoff auf die Messung. Ein kleines Messvolumen verkürzt die notwendige Prüfzeit, und Temperatureinflüsse werden minimiert.

Würde man dagegen größere Rohrleitungsvolumen als Messraum heranziehen, wie sie im Stand der Technik vorgeschlagen werden, dann würden sich durch Inhomogenitäten innerhalb dieser Rohrleitungen - Lufteinschluss, gelöste Luft - nicht ideale Flüssigkeiten - Änderungen in der Kompressibilität des flüssigen Brennstoffes ergeben, die die Messergebnisse stark verfälschen können, so dass die Messungen schlecht reproduzierbar sind.

Gemäß eines weiteren Aspekts werden die zu überprüfenden Absperreinrichtungen mittels zusätzlicher Druckerzeuger mit einem Prüfdruck aufgeprägt. Hierdurch wird innerhalb des Messraums ein genauer Prüfdruck vorgegeben, der eine gezielte, sichere und genaue Messung ermöglicht.

Vorzugsweise ist die Prüfvorrichtung direkt dem Magnetventil zugeordnet. Hierdurch lässt sich eine kompakte Bauform erreichen.

Vorzugsweise wird die Ventillänge möglichst gleich zu bisher eingesetzten Ventilen beibehalten. Dadurch können Originalventile aus Zulieferketten größtenteils weiterhin verwendet werden; sie werden lediglich noch um die Prüffunktion erweitert.

Alternativ können solche Originalventile durch mit entsprechender Prüfvorrichtung ausgestatteter Ventile ersetzt werden.

Ein Ausführungsbeispiel der Erfindung wird nachfolgend anhand der beigefügten Zeichnung näher erläutert. Darin zeigt:
- Fig. 1: eine schematische Prinzipdarstellung (hydraulisches Schaltdiagramm) einer Ölfeuerungsanlage mit einem Ölbrenner, der über eine Brennstoffleitung mit Absperreinrichtungen mit flüssigem Brennstoff versorgt wird, wobei wenigstens eine der Absperreinrichtungen mit einer Absperreinrichtungsprüfvorrichtung gemäß einer ersten Ausführungsform versehen ist;
- Fig. 2: eine schematische Prinzipdarstellung (hydraulisches und elektrisches Schaltdiagramm) einer Ölfeuerungsanlage mit einem Ölbrenner, der über eine Brennstoffleitung mit Absperreinrichtungen mit flüssigem Brennstoff versorgt wird, wobei wenigstens eine der Absperreinrichtungen mit einer Absperreinrichtungsprüfvorrichtung gemäß einer zweiten Ausführungsform versehen ist;
- Fig. 3 und 4: rein zu Erläuterungszwecken schematische Schnittdarstellungen auf dem Markt erhältlicher Magnetventile zur Verdeutlichung zweier möglicher Funktionsprinzipien von Magnetventilen, die als Absperreinrichtungen mit einer Absperreinrichtungsprüfvorrichtung der hier beschriebenen Art überwacht werden können;
- Fig. 5: eine Schnittdarstellung eines ersten Ausführungsbeispiels einer Absperreinrichtungstesteinrichtung am Beispiel eines an einem Magnetventil integrierten Systems;
- Fig. 6: eine Schnittdarstellung durch ein zweites Ausführungsbeispiel einer Absperreinrichtungstesteinrichtung;
- Fig. 7: eine Schnittdarstellung durch einen Schließkolben, welcher als Teil einer Schließeinrichtung bei der Absperreinrichtungstesteinrichtung von Fig. 6 eingesetzt ist;
- Fig. 8: einen Schnitt durch ein Absperreinrichtungsgehäuse der Absperreinrichtungstesteinrichtung zum Darstellen eines Druckanschlusses; und
- Fig. 9: eine vergrößerte Darstellung aus Fig. 7 zur Verdeutlichung von Dichtstellen der Absperreinrichtung, die durch die Absperreinrichtungstesteinrichtung von Fig. 7 auf Dichtheit zu überprüfen sind.

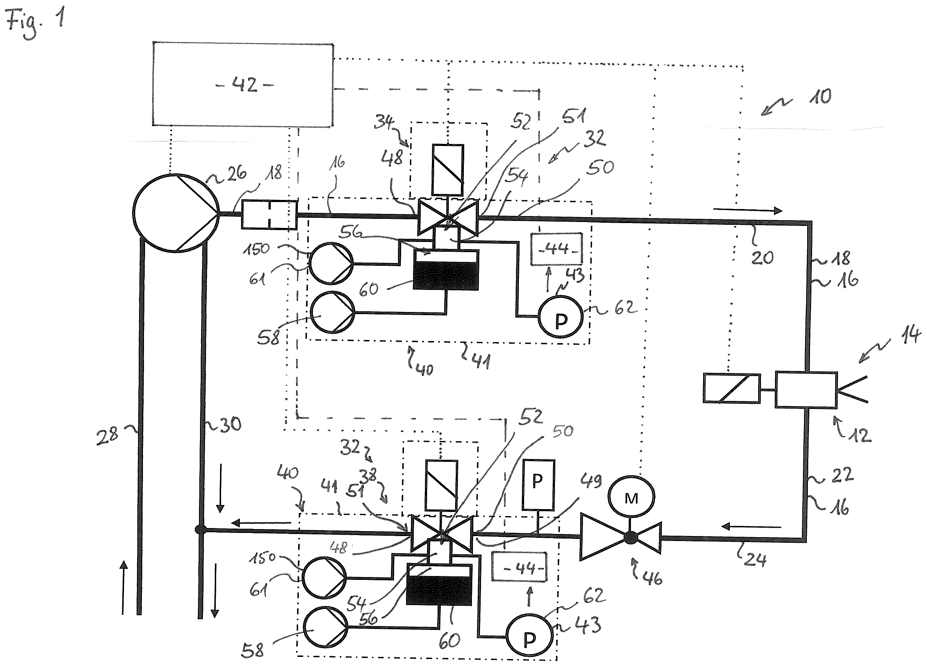

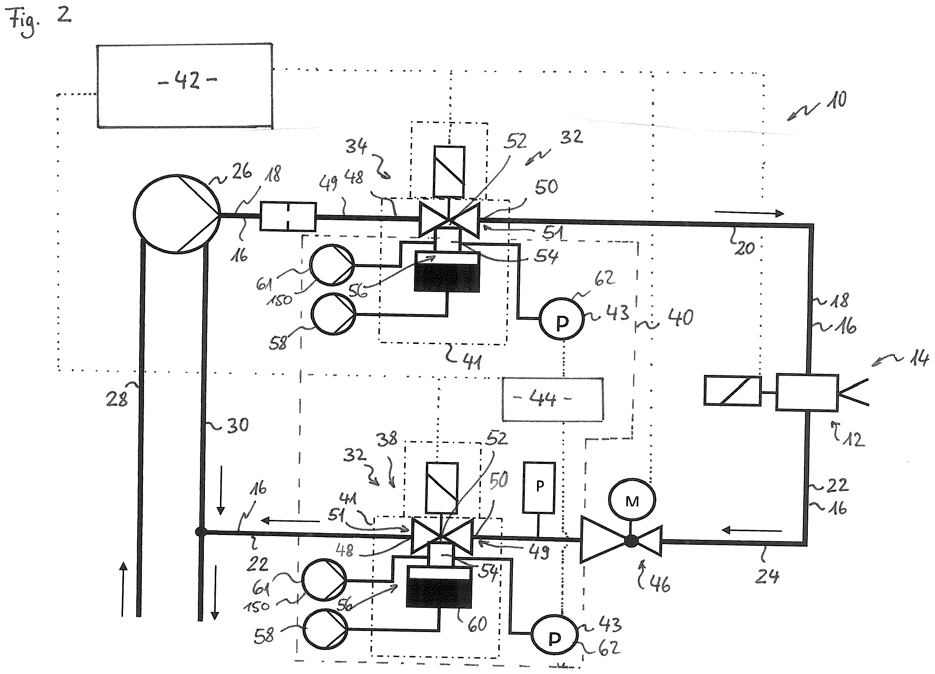

In den Fig. 1 und 2 sind Hydraulikschemata einer Ölfeuerungsanlage 10 dargestellt. Die Ölfeuerungsanlage 10 ist mit Absperreinrichtungsprüfvorrichtungen 40 versehen, von denen eine erste Ausführungsform in Fig. 1 und eine zweite Ausführungsform in Fig. 2 wiedergegeben ist. Zunächst werden anhand beider Figuren 1 und 2 die gemeinsamen Merkmale der Ölfeuerungsanlage 10 und dieser Ausführungsformen der Absperreinrichtungsprüfvorrichtungen 40 erläutert; anschließend wird auf die Unterschiede eingegangen.

Die Ölfeuerungsanlage 10 weist einen mit flüssigem Brennstoff, wie insbesondere Öl, betreibbaren Brenner 12 auf, von dem in Fig. 1 und 2 nur ein magnetischer Düsenkopf 14 einer Zerstäubungsdüse zur Zerstäubung des flüssigen Brennstoffes dargestellt ist.

Der Düsenkopf 14 ist an eine Brennstoffringleitung 16 angeschlossen, die als erste Brennstoffleitung 18 einen Zulauf 20 für flüssigen Brennstoff und als zweite Brennstoffleitung 22 einen Rücklauf 24 für flüssigen Brennstoff aufweist.

Eine Brennerpumpe 26 versorgt die erste Brennstoffleitung 18 mit flüssigem Brennstoff unter einem Brennstoffdruck, der ausreichend ist, eine Zerstäubung des flüssigen Brennstoffes in dem Düsenkopf 14 zu ermöglichen.

Um eine möglichst feine Zerstäubung zu ermöglichen, ist der Brennstoffdruck möglichst hoch zu wählen, beispielsweise oberhalb von 8 bar, insbesondere oberhalb von 15 bar, und ist in einem bevorzugten Ausführungsbeispiel auf ca. 30 bar gesetzt.

Die Brennerpumpe 26 ist an einen Brennerpumpenzulauf 28 zum Versorgen der Brennerpumpe 26 mit flüssigem Brennstoff, insbesondere Heizöl oder dergleichen, und an einen Brennerpumpenablauf 30 angeschlossen, um überschüssigen flüssigen Brennstoff von der Brennerpumpe 26 abzuleiten.

Die zweite Brennstoffleitung 22 ist einerseits an den Düsenkopf 14 angeschlossen und andererseits an den Brennerpumpenablauf 30 angeschlossen und dient dazu, flüssigen Brennstoff von dem Düsenkopf 14 zurückzuleiten.

Die erste Brennstoffleitung 18 ist mit wenigstens einer Absperreinrichtungen 32 versehen, um die Brennstoffzufuhr zu dem Brenner 12 automatisch gesteuert zu unterbinden.

Die zweite Brennstoffleitung 22 ist mit wenigstens einer Absperreinrichtung 32 versehen, um den Rücklauf 24 automatisch gesteuert zu sperren.

Bei den gezeigten Ausführungsbeispielen ist in der ersten Brennstoffleitung 18 ein erstes Magnetventil 34 als Absperreinrichtung 32 vorgesehen. Weiter ist bei den Ausführungsbeispielen die zweite Brennstoffleitung 22 mit einer Absperreinrichtung 32 in Form eines zweiten Magnetventils 38 versehen.

Wenigstens eine der Absperreinrichtungen 32 ist mit einer Absperreinrichtungsprüfvorrichtung 40 versehen. Insbesondere ist die Absperreinrichtung 32 in der ersten Brennstoffleitung 18 mit einer Absperreinrichtungsprüfvorrichtung 40 versehen. Bei einem bevorzugten Ausführungsbeispiel ist weiter auch wenigstens eine Absperrreinrichtung 32 in der zweiten Brennstoffleitung 22 mit einer derartigen Absperreinrichtungsprüfvorrichtung 40 versehen. Beispielsweise sind das erste Magnetventil 32 und das zweite Magnetventil 38 mit wenigstens einer oder mit jeweils einer Absperreinrichtungsprüfvorrichtung 40 versehen.

Die Absperreinrichtungsprüfvorrichtung 40 weist eine der zu prüfenden Absperreinrichtung 32 zugeordnete Absperreinrichtungstesteinrichtung 41, eine Druckerfassungseinrichtung 43 und eine Auswerteeinrichtung 44 auf.

Die Absperreinrichtungsprüfvorrichtung 40 dient zur Überprüfung der Dichtheit der zugeordneten Absperreinrichtung 32, beispielsweise um so ungewollte Leckagen in einen Brennraum der Ölfeuerungsanlage 10 hinein zu unterbinden.

Wie weiter in Fig. 1 und 2 dargestellt, weist die Ölfeuerungsanlage 10 eine Steuerung 42 zur automatischen Ablaufsteuerung des Betriebs der Ölfeuerungsanlage 10 auf. Der Steuerung 42 ist die Auswerteeinrichtung 44 zugeordnet, die Signale der Druckerfassungseinrichtung 43 empfängt, um in Abhängigkeit davon die Steuerung 42 zu beeinflussen.

Die Steuerung 42 ist beispielsweise derart ausgebildet, dass vor jedem Start des Brenners 12 oder nach jedem Ende eines Betriebs des Brenners 12 eine Dichtheitskontrolle mittels der wenigstens einen Absperreinrichtungsprüfvorrichtung 40 durchgeführt wird und nur dann ein (erneuter) Start des Brenners 12 erfolgen kann, wenn Dichtheit der zu testenden Absperreinrichtung 32 festgestellt worden ist.

In dem dargestellten Ausführungsbeispiel ist weiter noch ein Druckregler 46 in der zweiten Brennstoffleitung 22 angeordnet, mittels welcher der Druck in der Brennstoffringleitung 16, insbesondere im Bereich des Düsenkopfes 14, geregelt werden kann. Auch dieser Druckregler 46 ist an die Steuerung 42 angeschlossen. Der Druckregler 46 ist als Ölmengenregler im Rücklauf 24 ausgebildet. Lässt der Ölmengenregler eine größere Menge an Öl in dem Rücklauf 24 fließen, so verringert sich der Druck im Zulauf 20; lässt der Ölmengenregler dagegen weniger Öl zurückfließen, so erhöht sich der Druck im Zulauf 20.

Wie in den Fig. 1 und 2 gezeigt, ist die Absperreinrichtungstesteinrichtung 41 an der zugehörigen Absperreinrichtung 32 integriert. Die Absperreinrichtung 32 weist einen ersten Anschluss 48, beispielsweise einen Eingang 49 für den flüssigen Brennstoff, und einen zweiten Anschluss 50, beispielsweise einen Ausgang 51 für den flüssigen Brennstoff, auf. Zwischen dem ersten Anschluss 48 und dem zweiten Anschluss 50 ist ein Flüssigkeitsdurchgang 52 gebildet, der durch die Absperreinrichtung 32 gesteuert durch die Steuerung 42 automatisch gesperrt oder geöffnet werden kann. Die Absperreinrichtungstesteinrichtung 41 weist eine in dem Flüssigkeitsdurchgang 52 gebildete Messkammer 54 auf.

Die Messkammer 54 ist an einem Ende durch die Absperreinrichtung 32 schließbar und an einem anderen Ende durch eine Schließeinrichtung 56 automatisch gesteuert schließbar.

Die Schließeinrichtung 56 weist eine Pumpe 58, z.B. in Form einer Zahnradpumpe, und einen Schließkolben 60 auf.

Weiter ist eine Druckerzeugungseinrichtung 150 zum Beaufschlagen der Messkammer 54 mit einem definierten Prüfdruck vorgesehen.

Bei den Ausführungsformen der Fig. 1 und 2 weist die Druckerzeugungseinrichtung 150 eine gesonderte Prüfdruckpumpe 61 zum Erzeugen des Prüfdrucks auf. Bei einer in den Fig. 1 und 2 nicht näher dargestellten möglichen Ausgestaltung ist nur eine Pumpe 58 und ein Druckregelventil vorgesehen, mittels dem unter Druck stehende Flüssigkeit, beispielsweise durch die Pumpe 58 unter Druck gesetzte Prüfflüssigkeit, in die Messkammer 54 derart geleitet werden kann, dass sich in der Messkammer 54 der vorbestimmte Prüfdruck ausbildet.

Insbesondere für die Prüfung von Absperrventilen für schweres Heizöl ist bevorzugt, als Prüfflüssigkeit eine definierte, in ihren Eigenschaften bekannte gesonderte Prüfflüssigkeit, z.B. ein bestimmtes Prüföl, einzusetzen, da die physikalischen Eigenschaften von schwerem Heizöl stark schwanken, so dass die Verwendung dieses flüssigen Brennstoffes als Prüfmedium aufgrund der Schwankungen zu Messungenauigkeiten führen könnte. Wird dagegen als Brennstoff ein flüssiger Brennstoff mit im Wesentlichen gleichbleibenden physikalischen Eigenschaften geliefert - z.B. Heizöl extra leicht - ,kann man auch den Brennstoff selbst gut als Prüfflüssigkeit verwenden und damit recht genaue nachprüfbare Messergebnisse erzielen.

Vorzugsweise wird eine Prüfflüssigkeit verwendet, die ohne Probleme mit dem Brennstoff vermischt werden kann und mit verbrannt werden kann.

Als Druckerfassungseinrichtung 43 ist ein Druckmessgerät 62, beispielsweise ein Druckmanometer, ein Drucksensor oder dergleichen, an die Messkammer 54 angeschlossen, um so Druckänderungen in der Messkammer 54 zu erfassen.

Bei der in Fig. 1 dargestellten Ausführungsform sind die Druckerzeugungseinrichtung 150 und die Betätigungseinrichtung für die Schließeinrichtung (also insbesondere die Pumpen 58, 61) sowie die Druckerfassungseinrichtung 43 Teil der Absperreinrichtungstesteinrichtung 41, so dass die Absperreinrichtungsprüfvorrichtung 40 mit nur wenigen Bauteilen geschaffen wird.

Die Druckerzeugungseinrichtung 150 ist beispielsweise an einen nicht näher dargestellten Tank mit Prüfflüssigkeit angeschlossen, um damit die Messkammer 54 mit einem vorbestimmten Prüfdruck zu beaufschlagen. Z.B. wird die Prüfflüssigkeit mittels der Prüfdruckpumpe 61 in die Messkammer 54 mit dem Prüfdruck geliefert. Alternativ oder zusätzlich ist ein Regelventil vorgesehen, um unter hohem Druck stehende Prüfflüssigkeit mit dem vorbestimmten Prüfdruck in die Messkammer 54 einzuleiten.

Die Pumpe 58 für den Schließkolben 60 kann ebenfalls durch einen integrierten Tank (nicht dargestellt) mit Hydraulikmedium versorgt werden. Alternativ wird der Schließkolben pneumatisch oder mit Gasmedium betrieben. Z.B. erzeugt die als Luftpumpe ausgebildete Pumpe 58 einen Luftdruck zum Betätigen des Kolbens. In einer weiteren alternativen Ausgestaltung ist eine Druckgasquelle wie z.B. ein Gasvorrat, insbesondere eine Gasflasche, vorgesehen, wobei Druckmedium zur Kolbenbetätigung anstelle durch eine Pumpe 58 durch den Gasvorrat und ein Steuerventil bereit gestellt wird.

Bei der in Fig. 2 dargestellten zweiten Ausführungsform sind an der Absperreinrichtung 32 nur die Messkammer 54 und die Schließeinrichtung 56, z.B. mit dem Schließkolben 60, integriert, die Druckerzeugungseinrichtung 150, z.B. die Pumpen 58, 61, die Druckerfassungseinrichtung 43 und die Auswerteeinrichtung sind separate Bauteile, die an Absperreinrichtungstesteinrichtung 41 angeschlossen sind. Auch hier lässt sich der Schließkolben 60 hydraulisch oder pneumatisch betätigen.

In weiteren nicht dargestellten Ausführungsformen weist die Schließeinrichtung 56 ein anderes Schließelement als den Schließkolben 60 auf. Vorstellbar ist beispielsweise eine Membran mit integriertem Dichtelement.

In einer weiteren Ausführungsform der Schließeinrichtung 56 ist das Schließelement wie z.B. der Schließkolben 60 elektromagnetisch betätigt.

Besonders bevorzugt ist eine Vorspannungseinrichtung vorgesehen, mit der das Schließelement der Schließeinrichtung 56, also z.B. der Kolben 60, in seine Offenstellung vorgespannt ist, so dass die Schließeinrichtung in nicht betätigtem Zustand immer offen steht. Dies ist insbesondere für Absperreinrichtungstesteinrichtungen 41, die im Rücklauf 22 eingesetzten Absperreinrichtungen 32 zugeordnet sind, bevorzugt. Bei Ausfall von Hilfsenergien wäre so der Rücklauf 22 dennoch offen, so dass der flüssige Brennstoff im Rücklauf 22 vom Brenner 12 zurückfließen kann.

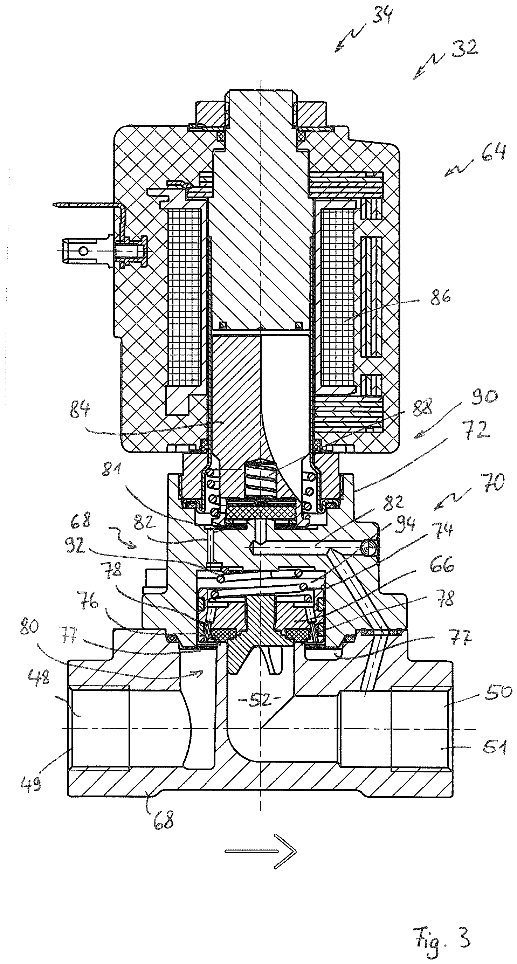

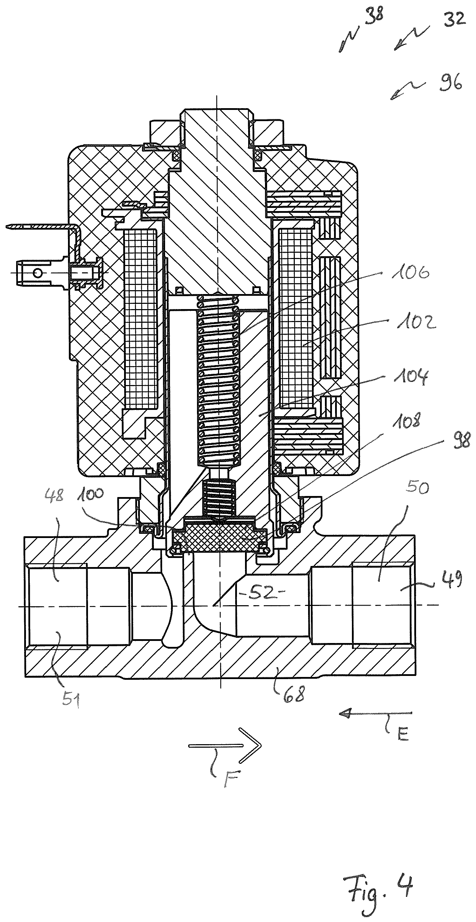

Die Absperreinrichtungsprüfvorrichtung 40 ist insbesondere zur Dichtheitsüberwachung von Magnetventilen 34, 38 ausgebildet. Zur Erläuterung der bevorzugten Konstruktion und Funktion der Absperreinrichtungsprüfvorrichtung 40 und deren Absperreinrichtungstesteinrichtung 41 werden daher zunächst anhand der Fig. 3 und 4 übliche Aufbauten und übliche Wirkungsprinzipien von ÖlMagnetventilen erläutert.

Fig. 3 zeigt eine erste Ausführungsform eines für derartige Brennstoffleitungen für flüssige Brennstoffe geeigneten auf dem Markt erhältlichen Magnetventils. Die Fig. 3 zeigt ein vorgesteuertes Magnetventil 64 mit Ventilkolben 66, welches stromlos geschlossen ist. Derartige vorgesteuerte Magnetventile 64 sind vom Prinzip her als Magnetventile 34 im Zulauf 20 einsetzbar.

Das vorgesteuerte Magnetventil 64 weist ein Ventilgehäuse 68 auf, das als Anschlüsse 48, 50 den Eingang 49 und den Ausgang 51 aufweist. Die Anschlüsse 48, 50 sind kollinear zueinander an diametral gegenüberliegenden Seiten des Ventilgehäuses 68 ausgebildet wobei, an die Anschlüsse 48, 50 Bereiche der Brennstoffleitung 18 anschließbar sind. An dem Ventilgehäuse 68 ist ein Ventilbetätigungsaufsatz 72 angebracht, der die Funktionselemente des Ventils wie Ventilkolben 66 und Aktuatoren zum Bewegen derselben umfasst. Ventilgehäuse 68 und Ventilbetätigungsaufsatz 72 bilden zusammen einen Ventilkörper 70, der zwischen die Bereiche der Brennstoffleitung 18 geschaltet ist.

Der Ventilbetätigungsaufsatz 72 weist einen Ventilzylinder 74 auf, in dem der Ventilkolben 66 auf und ab beweglich geführt ist. Im geschlossenen Zustand sitzt der Ventilkolben 66 auf einem an dem Ventilgehäuse 68 gebildeten Ventilsitz 76 auf. Bei dem Aufsitzen des Ventilkolbens 66 auf dem Ventilsitz 76 wird der Ausgang 51 verschlossen. Ein vorstehender äußerer Randbereich des Ventilkolbens 66 deckt dabei einen Kanal 77 des Eingangs 49 ab. Der Ventilkolben 66 weist Drosselbohrungen 78 auf, die auch im geschlossenen Zustand mit dem unter Druck befindlichen Eingang 49 in Fluidverbindung stehen, so dass ein Raum - Kammer 94 - zwischen dem Ventilzylinder 74 und der Rückseite des Ventilkolbens 66 mit unter Druck stehendem, flüssigem Brennstoff beaufschlagt ist. Dieser Ventilkolben 66 und der dadurch verschließbare Flüssigkeitsdurchgang 52 zwischen Eingang 49 und Ausgang 51 bilden einen Lastteil 80 des vorgesteuerten Magnetventils 74. Zusätzlich gibt es noch einen Vorsteuerteil 81 mit einer Nebenpassage 82, welche über einen Kern oder Hubanker 84 mittels einer Magnetspule 86 gegen die Kraft einer Rückstellfeder 88 magnetisch steuerbar ist. Diese entsprechend durch den magnetgesteuerten Kern oder Hubanker 84 verschließbare Nebenpassage 82 bildet ein Vorsteuerventil 90 des vorgesteuerten Magnetventils 64. Mit anderen Worten ist das vorgesteuerte Magnetventil 64 aus einem Vorsteuerteil 81 und einem Lastteil 80 gebildet. Die Hauptventilfunktion wird durch den Ventilkolben 66 übernommen, der mit einer Ventilkolben-Rückfeder 92 in die Schließstellung vorgespannt ist. Das Vorsteuerventil 90 wird über einen Elektromagneten betätigt und schließt mit Hilfe der weiteren Rückstellfeder 88. Stromlos ist das vorgesteuerte Magnetventil 64 somit geschlossen.

Wie Fig. 3 zeigt, gelangt der flüssige Brennstoff bei Anlegen eines Vorlaufdrucks als Brennstoffdruck (auch VL-Druck genannt) - dieser kann z.B. je nach Brennergröße 20 bis 30 bar betragen - durch die als Vorsteuerkanal ausgebildete Nebenpassage 82 in die Kammer 94 oberhalb des Ventilkolbens 66. Das Vorsteuerventil 90 ist dabei weiterhin geschlossen. In der Kammer 94 oberhalb des Ventilkolbens 66 baut sich nun auch der Brennstoffdruck auf. Aufgrund des dadurch hervorgerufenen Kräfteunterschiedes am Ventilkolben 66 verschließt der Ventilkolben 66 den Ventilsitz 76 im Hauptventil. Somit unterstützt der in der ersten Brennstoffleitung 18 anstehende hohe Brennstoffdruck das Verschließen des Flüssigkeitsdurchgangs 52, in dem der Ventilkolben 66 mit diesem Druck gegen den Ventilsitz 76 gepresst wird.

Zum Öffnen wird mit der Bestromung des vorgesteuerten Magnetventils 74 in der Magnetspule 86 ein Magnetfeld induziert, wodurch sich das Vorsteuerventil 90, genauer der Kern 84 desselben, von seinem Sitz anhebt, um so die Nebenpassage 82 zu öffnen. Der Querschnitt der Nebenpassage 82 (auch als Steuerkreis bezeichnet) ist größer als der Querschnitt der Drosselbohrung 78. Dadurch kann mehr Flüssigkeit aus der Nebenpassage 82 abfließen, als durch die Drosselbohrung 78 nachfließt. Dadurch fällt der Druck in der Kammer 94 oberhalb des Ventilkolbens 66 ab. Da auch rund um den Ventilsitz 76, wie in Fig. 3 durch den Kanal 77 dargestellt, der Brennstoffdruck auf einem Außenbereich des Ventilkolbens 76 anliegt, wird die auf der Unterseite des Ventilkolbens 66 wirkende Kraft größer als die auf der Oberseite wirkende Kraft, wodurch der Ventilkolben 66 von dem Ventilsitz 76 weggedrückt wird. Dadurch öffnet das Hauptventil, und flüssiger Brennstoff kann mit dem Brennstoffdruck den Flüssigkeitsdurchgang 52 passieren und somit von dem ersten Anschluss 48 zu dem zweiten Anschluss 50 gelangen, wodurch flüssiger Brennstoff bis zu dem Düsenkopf 14 geleitet wird.

In der als Rücklauf 24 wirkenden zweiten Brennstoffleitung 22 ist als zweites Magnetventil 38 ein direkt gesteuertes Magnetventil 96 eingesetzt, dessen Prinzip anhand der Darstellung in Fig. 4 näher erläutert wird.

Das direkt gesteuerte Magnetventil 96 weist bei einer Verwendung im Rücklauf 22, wo vor allem ein ungewolltes Einströmen von Brennstoff zu dem Brenner 12, auch durch Rückwärtsfluss im Rücklauf vermieden werden soll, am ersten Anschluss 48 den Ausgang 51 und am zweiten Anschluss 50 den Eingang 51 auf, der in dem entsprechend angepasst konstruierten Ventilgehäuse 68 ausgebildet ist, wobei der Flüssigkeitsdurchgang 52 von dem ersten Anschluss 48 zu dem zweiten Anschluss 51 (und umgekehrt) reicht und durch Aufsitzen eines Ventilkolbens 98 auf einem Ventilsitz 100 gesperrt werden kann. Der Ventilkolben 98 ist an einem über eine Spule 102 magnetisch bewegbaren Anker 104 ausgebildet, der durch eine Feder 106 in seine Schließlage vorgespannt ist. Weiter weist der Ventilkolben 98 einen gedämpften Sitzteller 108 auf.

Mit dem Pfeil F ist eine übliche Fließrichtung bei Verwendung des Magnetventils 96 in einer Hydraulik, bei der eine Flüssigkeit mit hohem Druck am Zulauf geliefert wird und zu einem Ablauf mit geringerem Druck fließen soll, dargestellt; bei einer solchen Verwendung würde an dem ersten Anschluss 48 der Eingang 49 und an dem zweiten Anschluss 50 der Ausgang 51 liegen. Hoher Druck am ersten Anschluss 48 drückt den Ventilkolben 98 fester auf seinen Ventilsitz. Bei der Ölfeuerungsanlage 10 werden derartige Ventile jedoch entgegengesetzt verwendet, wie durch den Pfeil E angedeutet; d.h. mit dem Eingang 49 am zweiten Anschluss 50 und dem Ausgang 51 am ersten Anschluss 48.

Demnach sind bevorzugt als Sicherheitsabsperrventile im Rücklauf 24 direkt gesteuerte Magnetventile 96 eingesetzt, die stromlos geschlossen sind. Derartige direkt gesteuerte Magnetventile 96 benötigen keine Mindestdruckdifferenz. Das Dichtelement - Ventilkolben 98 - ist mit dem Anker 104 gekoppelt und wird durch Federkraft, unterstützt vom Mediumsdruck (Brennstoffdruck am ersten Anschluss 48, d.h. hier am Ausgang 51) auf den Ventilsitz 100 gepresst. Der Ventilsitz 100 wird durch den federbelasteten Anker 104 geschlossen. Beim Anlegen eines höheren Brennstoffdruckes am ersten Anschluss 48, d.h. am Ausgang 51, unterstützen die herrschenden Kräfte am Anker 104 die Schließwirkung. Die Fläche, auf die der Druck von dem ersten Anschluss 48 her wirkt, ist an der Oberseite des Ankers 104 größer als an der Unterseite; somit entsteht an der Oberseite des Ankers 104 eine größere Kraft.

Durch die entgegengesetzte Einbauweise mit Fließrichtung E anstatt F wird somit sichergestellt, dass auch bei einem Auftreten eines hohen Drucks am Brennerpumpenablauf 30 kein Brennstoff zurück zum Brenner 12 fließen kann.

Wird Spannung an die Spule 102 angelegt, so wird ein Magnetfeld induziert. Der federbelastete Anker 104 wird durch das Magnetfeld angezogen und öffnet damit den Ventilsitz. Zum Schließen des direkt gesteuerten Magnetventils 96 wird die angelegte Spannung abgeschaltet. Daraufhin bricht das Magnetfeld zusammen. Die vorgespannte Feder 106 am Anker 104 sorgt dafür, dass der Anker 104 den Ventilsitz 100 wieder schließt. Der gedämpfte Sitzteller 108 hat die Aufgabe, ein prellfreies Schließen des Ventils zu gewährleisten.

Die Absperreinrichtungsprüfvorrichtung 40 hat die Funktion, derartige Absperreinrichtungen 32, wie sie in der Brennstoffleitung 18, 22 eingesetzt werden, auf Dichtheit zu überprüfen.

Hierzu wird eine Absperreinrichtungstesteinrichtung 41 unmittelbar an der Absperreinrichtung 32 integriert. Dies erfolgt gemäß dem bevorzugten Ausführungsbeispiel durch Modifikation der entsprechenden Magnetventile 34, 38, d.h. durch Modifikation des vorgesteuerten Magnetventils 64 bzw. des direkt gesteuerten Magnetventils 96. Hierzu wird ausgehend von dem entsprechenden Magnetventil, wie es z.B. in Fig. 3 oder 4 gezeigt ist, das Ventilgehäuse 68 derart modifiziert, dass die Anschlüsse 48, 50 und der jeweilige Ventilbetätigungsaufsatz 72 unverändert bleiben. Die Anschlüsse 48, 50 sind somit weiterhin kollinear. Auch die Länge des Ventilgehäuses 68 in Axialrichtung der Anschlüsse 48, 50 wird so weit möglich beibehalten. Vorzugsweise wird die Länge nur geringfügig erhöht und beträgt dann z.B. zwischen 20 mm und 300 mm und insbesondere zwischen 60 mm und 110 mm und mehr insbesondere zwischen 70 mm und 85 mm.

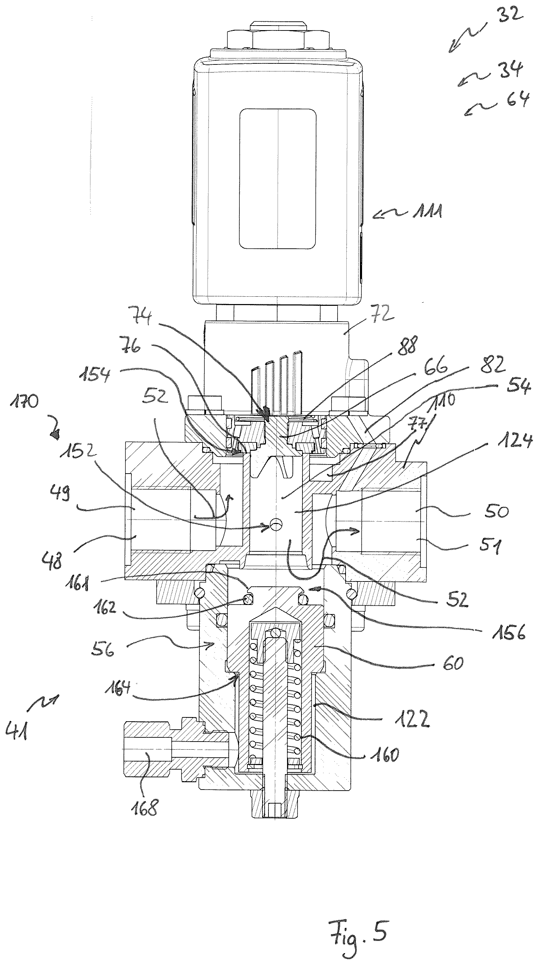

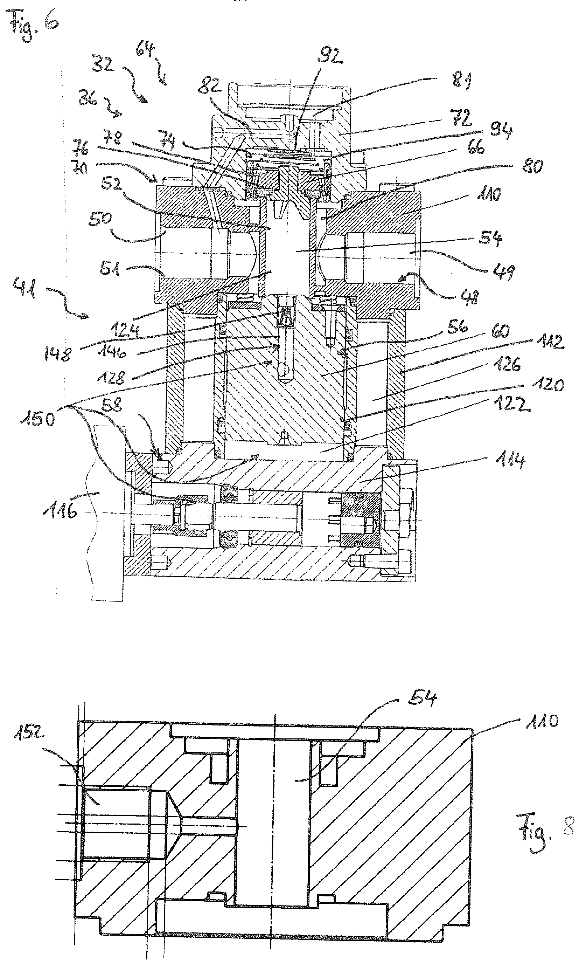

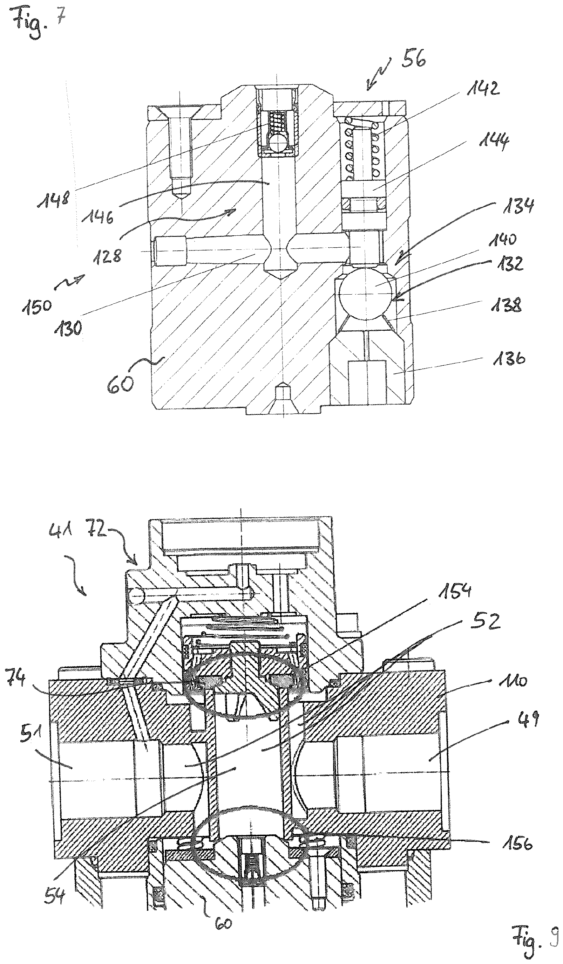

Jedoch werden zusätzliche Funktionseinheiten an der dem entsprechenden Magneten des Magnetventils 64, 96 diametral gegenüberliegenden Seite des Ventilgehäuses 110 angeordnet. Das entsprechend modifizierte Ventilgehäuse 110 ist an dem Ventil angebaut in Fig. 5 sowie Fig. 6 und in einer weiteren Darstellung alleine in Fig. 8 dargestellt. Die Fig. 5 und 6 zeigen zwei unterschiedliche Ausführungsformen der Absperreinrichtungstesteinrichtung 41, wobei die in Fig. 6 dargestellte erste Ausführungsform insbesondere in der in Fig. 2 gezeigten Absperreinrichtungsprüfvorrichtung 40 mit separaten Pumpen 58, 61 verwendbar ist. Bei der in Fig. 7 dargestellten zweiten Ausführungsform ist die Pumpe 58 an der Absperreinrichtungstesteinrichtung 41 integriert vorgesehen und dient einerseits zum Erzeugen der Schließkraft für den Schließkolben 60 und andererseits zum Bereitstellen des Prüfdrucks in der Messkammer 54.

Zunächst werden die gemeinsamen Merkmale der beiden Ausführungsformen erläutert, bevor auf die Unterschiede näher eingegangen wird.

Die Fig. 5 und 6 zeigen am Beispiel eines entsprechend modifizierten vorgesteuerten Magnetventils 64 eine mit einer entsprechenden Absperreinrichtungstesteinrichtung 41 versehene Absperreinrichtung 32.

Demnach weist die Absperreinrichtung 32 ein entsprechend modifiziertes Ventilgehäuse 110 und den Ventilsteuerkopf 111 auf, der mit Kern 84, Magnetspule 86, Rückstellfeder 88 der zuvor anhand der Fig. 3 beschriebenen Art versehen ist (in Fig. 5 nicht näher dargestellt). Auch der Ventilbetätigungsaufsatz 72 mit Ventilzylinder 74, Ventilkolben 66 und Ventilkolben-Rückstellfeder 88 sowie Nebenpassage 82 wird im Wesentlichen unverändert übernommen, so dass hier bereits auf dem Markt erhältliche Teile verwendet werden können. Lediglich der Ventilkörper 68 wird durch den modifizierten Ventilkörper 110 ersetzt, der hiernach noch genauer erläutert wird.

Fig. 5 und 6 zeigen Schnittdarstellungen der mit der Absperreinrichtungstesteinrichtung 41 versehenen Absperreinrichtung 32. Der Flüssigkeitsdurchgang 52 reicht von dem ersten Anschluss 48 mit dem Eingang 49 zu dem zweiten Anschluss 50 mit dem Ausgang 51 und lässt sich durch den Ventilkolben 66 verschließen. Der Ventilbetätigungsaufsatz 72 ist gleich dem Ventilbetätigungsaufsatz 72 der Fig. 3, so dass auf die obigen Erläuterungen bezüglich dieser Absperrfunktion verwiesen werden kann.

Jedoch ist in dem Flüssigkeitsdurchgang 52 anschließend an den Ventilsitz 76 die hier rohrförmig ausgebildete Messkammer 54 vorgesehen, deren unteres Ende mit der Schließeinrichtung 56 verschließbar ist.

Die Schließeinrichtung 56 weist den Schließkolben 60 auf, der in einem Zylinder 120 gesteuert über einen in einer Druckkammer 122 unterhalb des Schließkolbens 60 aufgebauten Druck der Pumpe 58 nach oben bewegbar ist und somit das untere Ende des die Messkammer 54 beherbergenden rohrförmigen Messraums 124 fest abschließt. Dieser Messraum 124 bildet in der Messkammer 54 ein definiertes Volumen.

Das Ventilgehäuse 110 der Absperreinrichtungstesteinrichtung 41 ist damit analog zu dem Ventilgehäuse 68 eines auf dem Markt erhältlichen Magnetventils 64 (oder auch 96) ausgebildet, um eine optimale Anpassung der Testeinrichtung an das zu prüfende Ventil zu schaffen. Dadurch lässt sich die Adaption des Ventilteils - insbesondere Ventilbetätigungsaufsatz 72 - an die Prüfvorrichtung leicht realisieren. Ist ein originaler Ventilbetätigungsaufsatz 72 montiert, herrscht eingangsseitig dieselbe Situation hinsichtlich der Betätigung des Ventils wie zuvor anhand der Fig. 3 und 4 für das jeweilige Magnetventil 64, 96 beschrieben. Ausgangsseitig ist das Ventilgehäuse 110 jedoch so gestaltet, dass mit dem Schließkolben 60 der Zugang zum zweiten Anschluss 50 - z.B. Ausgang 51 beim ersten Magnetventil 34 bzw. Eingang 49 beim zweiten Magnetventil 38 - abgesperrt werden kann. Der Ventilkolben 66 und der Schließkolben 60 schließen somit einen definierten Messraum 124 ein. Das Volumen dieses Messraums 124 bzw. der Messkammer 54 sollte möglichst klein sein, damit der mögliche Einfluss auf den Druck durch Luftgehalt und Temperatur minimiert wird.

Beispielsweise wird die Messkammer 54 lediglich durch eine querlaufende Bohrung innerhalb des Ventilgehäuses 110 gebildet. Z.B. wird das Volumen der Messkammer 54 je nach zu liefernder Brennstoffmenge und entsprechend vorzusehendem Durchmesser des Flüssigkeitsdurchgangs 52 kleiner als 100 mm, insbesondere kleiner als 50 mm und mehr insbesondere zwischen ca. 20 ml und ca. 1 ml gewählt.

Bei der in Fig. 5 dargestellten ersten Ausführungsform ist der Ventilkolben 66 in seiner geschlossenen Position und der Schließkolben 60 in seiner geöffneten Position dargestellt. Der Flüssigkeitsdurchgang 52 am Schließkolben 60 vorbei ist mit Pfeilen dargestellt. Die Messkammer 54 ist mit einem Zugang für den Anschluss an die Prüfdruckpumpe 61 und für den Anschluss der Druckerfassungseinrichtung 43 versehen.

Der Schließkolben 60 ist bei der in Fig. 5 dargestellten Ausführungsform in seine Offenstellung mechanisch vorgespannt, so dass sich im Normalzustand, ohne Druckbelieferung durch die Pumpe 58, stets der in der Fig. 5 gezeigte offene Zustand eintritt. Z.B. ist der Schließkolben 60 mit einer Rückholfeder 160 versehen. An seiner der Messkammer 54 zugewandten Seite weist der Schließkolben 60 eine metallische Dichtfläche 161 und zudem eine Weichdichtung 162 auf, um so das Messvolumen einenends durch eine kombinierte metallische und weichdichtende Abdichtung abzudichten. Hierdurch wird eine besonders gute Abdichtung geschaffen, die hohen Dichtanforderungen genügt und als Referenzdichtung (zweite zu überprüfende Dichtstelle 156 zusätzlich zu der ersten zu überprüfenden Dichtstelle 154 am Ventilsitz 76) dienen kann.

An seinem anderen Ende ist der Schließkolben 60 mit der Rückholfeder 160 versehen und mit einer Druckfläche 164 versehen, die einer Druckkammer 122 zugewandt ist, welche durch einen Hydraulikanschluss 168 an die Pumpe 58 anschließbar ist. Wird die Pumpe 58 betätigt, schließt so der Schließkolben 60 dicht die Messkammer 54 von unten ab.

Im geschlossenen Zustand kann über die Prüfdruckpumpe 61 Prüföl in die Messkammer 54 gepumpt werden, um so den definierten Prüfdruck in der Messkammer 54 aufzubauen. Anschließend kann der Druck in der Messkammer 54 durch die Druckerfassungseinrichtung 43 gemessen und durch die Auswerteeinrichtung 44 ausgewertet werden. Hierzu wird ein Prüfdruck aufgebaut, der deutlich geringer als der am Eingang 49 anstehende Brennstoffdruck ist. Die Auswertung wird weiter unten noch näher erläutert. Die Messkammer 54 ist weiter mit einer Entlüftungseinrichtung 170 versehen. Die Entlüftungseinrichtung 170 ermöglicht eine Entlüftung über einen Druckanschluss 152 für die Druckerfassungseinrichtung 43, wobei der Druckanschluss 152 hier einen schrägen Bohrungskanal aufweist.

Bei dem in der Fig. 5 gezeigten ersten Ausführungsbeispiel der Absperreinrichtungstesteinrichtung 41 lassen sich der Prüfdruckaufbau in der Messkammer 54 und das Schließen des Schließkolbens 60 durch separate Hydraulikkreise mit separat ansteuerbaren Pumpen 58, 61 bewirken, wie das zuvor anhand der Fig. 2 erläutert worden ist.

Das zweite Ausführungsbeispiel der Absperreinrichtungstesteinrichtung 41 weist, wie aus Fig. 6 ersichtlich, auf der Unterseite des Ventilgehäuses 110 ein Tankrohr 112 auf, welches z.B. mit Prüföl als Hydraulikflüssigkeit befüllbar ist und die Schließeinrichtung 56 beherbergt. An das Tankrohr 112 schließt sich ein Pumpengehäuse 114 der z.B. als Zahnradpumpe ausgebildeten Pumpe 58 an. Weiter ist ein Antriebsmotor 116 zum Antreiben der Pumpe 58 vorgesehen.

Um den im Ventilgehäuse 110 untergebrachten Messraum 124 zu schließen, wird der Schließkolben 60 über den Antriebsmotor 116 (z.B. Gleichstrommotor, 24 V) und Betreiben der Pumpe 58 hydraulisch angesteuert. Beim Einschalten des Antriebsmotors 116 saugt die Pumpe 58 Hydrauliköl aus einem integrierten Ölspeicher 126 - im Tankrohr 112 rings um den Zylinder 120 untergebracht - an. Das Öl - z.B. gesondertes Prüföl oder zur Dichtheitsprüfung geeignetes Heizöl- gelangt über das Pumpengehäuse 114 in die Druckkammer 122 auf der dem Messraum 124 gegenüberliegenden Seite des Schließkolbens 60. Mit Hilfe eines Gewindestifts (nicht dargestellt) im Pumpengehäuse 114, der die Aufgabe eines Druckregulierventils übernimmt, kann eingestellt werden, wie viel Flüssigkeit wieder über einen Rücklauf zurück in den Ölspeicher 126 des Tankrohrs 112 fließt. Dies bedeutet, dass hiermit auch eingestellt werden kann, wie viel Druck über die Pumpe 58 in der Druckkammer 122 am Schließkolben 60 aufgebaut werden kann. Zum Beispiel entspricht der Druck größenordnungsmäßig dem Brennstoffdruck und beträgt beispielsweise ca. 20 bis 30 bar.

Durch den nun in der Druckkammer 122 wirkenden Druck wird der Schließkolben 60 gegen das ausgangsseitige Ende der Messkammer 54 gedrückt, wodurch der zweite Anschluss 50 oder der Ausgang 51 gesperrt wird. Somit wird die Messkammer 54 ausgangsseitig gesperrt. Die Messkammer 54 kann somit durch Nicht-Bestromung des zu überprüfenden Magnetventils 64, 96 und Ansteuerung des Antriebsmotors 116 elektrisch gesteuert geschlossen werden. Hierzu ist die Steuerung 42 für den Automatikbetrieb entsprechend an das jeweilige Magnetventil und den Antriebsmotor 116 angeschlossen.

Der Schließkolben 60 besitzt bei der in Fig. 6 dargestellten zweiten Ausführungsform weiter eine Druckregelventilanordnung 128, wie sie im Folgenden anhand der Fig. 7 näher erläutert wird.

Der Schließkolben 60 ist mit einem Durchgangskanal 130 versehen, der von der Druckkammer 122 zu dem Messraum 124 reicht.

Dieser Durchgangskanal 130 weist einen ersten Abschnitt 132 mit einem Kegelventil 134 auf. Zum Beispiel weist das Kegelventil 134 eine Düse 136 mit Bohrung, eine Tellerfeder 138, eine Kugel 140 und einen mittels einer Druckfeder 142 die Kugel beaufschlagenden Schieber 144 auf.

Ein zweiter Abschnitt 146 des Durchgangskanals 130 ist mit einem Druckregulierventil 148 versehen.

Die Druckregelventilanordnung 128 ist derart ausgebildet, dass nach dem Schließen der Messkammer 54 ein bestimmter Druck in die Messkammer 54 eingebracht werden kann.

Liegt in der Druckkammer 122 am Schließkolben 60 ein Druck an, wird der Schließkolben 60 an das Ventilgehäuse 110 gedrückt. Über die Düse 136 gelangt Flüssigkeit in den Durchgangskanal 130. Das Kegelventil 134 begrenzt den in dem Durchgangskanal 130 herrschenden Druck. Das Druckregulierventil 148 ist so ausgebildet, dass es ab einem bestimmten Prüfdruck schließt.

Zum Beispiel steht in der Druckkammer 122 ein Druck von 30 bar an; das Kegelventil 134 schließt z.B. bei 20 bar und das Druckregulierventil 148 ist auf ein Schließen bei 15 bar ausgelegt. Somit bildet sich innerhalb der Messkammer 54 ein vordefinierter Prüfdruck (hier z.B. 15 bar) aus.

Die Pumpe 58 mit der Druckregelventilanordnung 128 bilden somit bei dieser Ausführungsform die Druckerzeugungseinrichtung 150, die in der Messkammer 54 befindliches Fluid mit einem Prüfdruck beaufschlagen kann. Diese Druckerzeugungseinrichtung 150 wird so ausgebildet und eingestellt, dass in der Messkammer 54 ein vorgegebener Prüfdruck erzeugt werden kann, der deutlich geringer als der jeweilige am Eingang 49 gelieferte Brennstoffdruck ist.

Der Prüfdruck sollte in der Regel sehr viel kleiner sein als der Nennbetriebsdruck oder ein entsprechend eingestellter Vorlaufdruck.

Beim Ansteuern der Pumpe 58 baut sich unterhalb des Schließkolbens 60 schlagartig ein größerer Druck (beispielsweise 30 bar) auf. Durch die relativ kleine Bohrung in der Düse 136 des Schließkolbens 60 baut sich der Druck im Durchgangskanal 130 langsamer auf. Damit wird erreicht, dass der Schließkolben 60 zuerst geschlossen wird, bevor ein größerer Druck in die Messkammer 54 eingebracht wird.

Fig. 8 zeigt einen weiteren Schnitt durch das Ventilgehäuse 110, und zwar senkrecht zu dem Schnitt von Fig. 6. Wie in Fig. 8 dargestellt, ist in dem Ventilgehäuse 110 ein Druckanschluss 152 für das Druckmessgerät 62 (hier nicht dargestellt) vorgesehen. An diesem Druckanschluss 152 kann das Druckmessgerät 62 angeschlossen werden, um damit den vorhandenen Druck in der Messkammer 54 zu messen.

Wie im Folgenden anhand der Fig. 9 näher erläutert, werden zum Abschließen der Messkammer 54 und somit zum Definieren des Messraumes 124 bei den dargestellten Ausführungsformen der Absperreinrichtungsprüfvorrichtung 40 zwei unterschiedliche Dichtprinzipien verwendet.

Am Ventilsitz 76 ist eine erste Dichtstelle 154 vorgesehen, die das Dichtprinzip einer Flachdichtung mit Weichstoffausführung verwendet.

Die Dichtung des Ventilkolbens 66 ist z.B. aus PTFE gefertigt und wird durch den anliegenden Brennstoffdruck (z.B. Vorlaufdruck) auf den Bohrungsquerschnitt der Messkammer 54 gepresst, um somit die Dichtwirkung zu erzielen. Vorteilhaft bei Weichdichtungen oder Mehrstoffdichtungen ist die Fähigkeit von Kunststoffen oder dergleichen, durch den anliegenden Betriebsdruck kleine Schmutzpartikel zu umlagern, ohne dabei eine Auswirkung auf die Dichtheit zu zeigen.

Am anderen Ende der Messkammer 54 erfolgt die Abdichtung des rohrförmigen Messraums 124 mittels des Schließkolbens 60 der Schließeinrichtung 56. Diese Abdichtung bildet eine zweite Dichtstelle 156. An dieser zweiten Dichtstelle 156 wird das Dichtprinzip einer Hartdichtung oder Metalldichtung (die bei der Ausführungsform der Fig. 5 mit einer Weichdichtung kombiniert ist) eingesetzt. Dieses Hartdichtprinzip entspricht im Wesentlichen dem Prinzip eines Kegelsitzventils. Bei einer Metalldichtung wird die Dichtwirkung über plastische Verformung erzielt.

Das auch bei Kegelsitzventilen verwendete Dichtprinzip wurde zum Abdichten im Bereich des Schließkolbens 60 gewählt, da es zum einen eine sehr gute Dichtwirkung verspricht. Zum anderen hat ein derartiger Kegelsitz den Vorteil, dass sich der Schließkolben 60 beim Schließen der Messkammer 54 selbst zentriert. Somit können Fertigungstoleranzen besser ausgeglichen werden.

In Fig. 5 ist eine Ausführungsform der Absperreinrichtungstesteinrichtung 41 gezeigt, bei der die Schließkolben-Pumpe 58, die die Druckerzeugungseinrichtung 150 bildende Prüfdruckpumpe und die Druckerfassungseinrichtung 43 separat ausgebildet sind und an die Absperreinrichtungstesteinrichtung 41 angeschlossen werden können. Bei der Ausführungsform von Fig. 6 ist die Pumpe 58 und die Druckerzeugungseinrichtung 150 an der Absperreinrichtungstesteinrichtung 41 integriert, wobei eine Pumpe 58 für beide Funktionen vorgesehen ist. Es ist für den Fachmann leicht ersichtlich, dass in weiteren, nicht näher dargestellten, aber in Fig. 1 angedeuteten Ausführungsformen sowohl die Pumpe 58 als auch die Prüfdruckpumpe 61 (bildet dann die Druckerzeugungseinrichtung 150) und weiter noch die Druckerfassungseinrichtung 43 an der Absperreinrichtungstesteinrichtung als eine Baueinheit integriert sein können. Es können hier z.B. separate Tanks für die Pumpen oder ein gemeinsamer Tank mit Prüföl, das auch als Hydrauliköl dient, vorgesehen sein.

Wenngleich die Absperreinrichtungstesteinrichtungen 41 am Beispiel der als vorgesteuerte Magnetventile 64 ausgebildeten ersten Magnetventile 34, wie sie im Zulauf 20 von Ölfeuerungsanlagen 10 eingesetzt werden, beschrieben worden ist, ist für die Fachmann klar und ersichtlich, dass in analoger Weise auch die in Fig. 4 erläuterten im Rücklauf 24 von Ölfeuerungsanlagen eingesetzten zweiten Magnetventile 38 mit entsprechenden Absperreinrichtungstesteinrichtungen 41 ausgerüstet sind.

Im Folgenden wird ein beispielhafter Betriebsablauf für die Ölfeuerungsanlage anhand der Darstellung in Fig. 1 und 2 näher erläutert.

Zu Beginn eines Startvorgangs wird zunächst bei geöffneten Absperreinrichtungen 32 und geschlossenem Düsenkopf 14 über die Brennstoffringleitung 16 und Lieferung von Brennstoff mittels der Brennerpumpe 26 ein Umlaufbetrieb durchgeführt. Hierdurch werden eventuelle Lufteinschlüsse in der Brennstoffringleitung 16 entfernt und der Brennstoff wird für eine bessere Zündfähigkeit erwärmt.

Vor oder vorzugsweise nach dem Umlaufbetrieb leitet die Steuerung 42 eine automatische Dichtheitskontrolle der mit den Absperreinrichtungstesteinrichtungen 41 versehenen Absperreinrichtungen 32 ein. Hierzu wird die zu prüfende Absperreinrichtung 32 an dem Eingang 49 mit Brennstoff mit entsprechendem Brennstoffdruck (z.B. 30 bar im Zulauf 20 bzw. 10 bar im Rücklauf 24) versorgt. Die entsprechend zu überprüfenden Magnetventile 64, 96 sind stromlos, so dass das eine Ende der Messkammer 54 mittels der Ventilkolben 66, 98 verschlossen ist. Die Pumpe 58 wird eingeschaltet, wodurch sich die Schließeinrichtung 56 schließt und in der Messkammer 54 der definierte Messraum 124 ausgebildet wird.

Über die Druckerzeugungseinrichtung 150 wird die Messkammer 54 mit dem vorbestimmten Prüfdruck beaufschlagt, der geringer als der am jeweiligen Eingang 49 anliegende Brennstoffdruck ist.

An dem Eingang 49 der ersten Magnetventile 34 steht somit der Brennstoffdruck, beispielsweise 30 bar, an. Dieser drückt den Ventilkolben 66 von oben auf den Ventilsitz 76, d.h. die Dichtkante der Messkammer 54, und schließt somit die Messkammer 54 an dem einen Ende ab. Bei den zweiten Magnetventilen 38 steht am Ausgang 51 der Druck vom Brennerpumpenablauf 30 an. Ansonsten wird dort der Ventilkolben 98 mittels der Feder 106 gegen den Ventilsitz 100 gedrückt.

Der Schließkolben 60 wird durch die Pumpe 58 mit dem Pumpendruck - z.B. 30 bar - beaufschlagt. Dieser in der Druckkammer 122 anliegende Pumpendruck drückt den Schließkolben 60 gegen das andere Ende der Messkammer 54 und schließt somit die Messkammer an diesem anderen Ende ab, um den definierten Messraum 124 zu bilden.

Entweder durch die Prüfdruckpumpe 61 oder durch die Druckregelventilanordnung 128 wird anschließend Fluid mit Prüfdruck in die Messkammer 54 geliefert, so dass sich in der Messkammer 54 der definierte Prüfdruck - z.B. 15 bar - einstellt. Anschließend wird der Druck innerhalb der Messkammer 54 mittels des Druckmessgerätes 62 für einen vorbestimmten Messzeitraum überwacht.

Die Auswerteeinrichtung 44 überwacht hierzu insbesondere eine Druckänderung innerhalb der Messkammer 54.

Die entsprechenden Flüssigkeiten können immer nur in Richtung des Druckgefälles strömen. Somit kann eine Druckänderung in der Messkammer 54 mit großer Sicherheit ihrer Ursache zugewiesen werden.

Die Auswerteeinrichtung 44 weist demnach entsprechende Druckänderungen gemäß der im Folgenden wiedergegebenen Tabelle 2 ihrer Ursache zu und gibt entsprechend unterschiedlichen Signale ab. Zum Beispiel wird ein erstes Signal bei Druckanstieg, ein zweites Signal bei Druckabfall und ein drittes Signal oder kein Signal abgegeben, wenn keine Druckänderung erfolgt.

**Tabelle 2**

| **Ergebnis** | **Ursache** | |
|---|---|---|
| | Ventilsitz (Dichtstelle 1) | Referenzsitz (Dichtstelle 2) |
| Druckabfall im Messvolumen | dicht | undicht |
| Druckanstieg im Messvolumen | undicht | dicht |
| Keine Druckänderung im Messvolumen | dicht | dicht |
| | *undicht* **)* | *undicht* **)* |

| | | |
|---|---|---|
| *) abfließende Ölmenge müsste identisch zur zu- bzw. nachfließenden Ölmenge in den Messraum sein = extrem unwahrscheinlich. | | |

Wenn sich in der Messkammer 54 keine Druckänderung messen lässt, sind nach dieser Tabelle die erste Dichtstelle 154 und die zweite Dichtstelle 156 entweder jeweils dicht oder jeweils undicht. Bei einer Undichtigkeit von beiden Dichtstellen müsste jedoch in etwa dieselbe Leckage-Menge, die über die erste Dichtstelle 154 einströmt, gleichzeitig über die zweite Dichtstelle 156 abströmen. Da dies sehr unwahrscheinlich ist, können beide Dichtstellen 154, 156 als dicht betrachtet werden, wenn keine Druckänderung im Messraum 124 stattfindet.

Demnach liefert die Auswerteeinrichtung das Signal "OK", wenn im Wesentlichen keine Druckänderung über die voreingestellte Zeit innerhalb der Messkammer 54 feststellbar ist.

Nur wenn die Steuerung 42 ein entsprechendes positives Auswerteergebnis von der Auswerteeinrichtung 44 erhält (zu überprüfende Absperreinrichtung 32 ist dicht), kann der Startvorgang fortgesetzt werden.

Anschließend erfolgt eine Zündung des Brenners und ein nachfolgender Betrieb, wie dies bei derartigen Ölfeueranlagen 10 im Wesentlichen bekannt ist.

Es ist noch zu erwähnen, dass der Prüfdruck bei der Absperreinrichtungstesteinrichtung 41 für das zweite Magnetventil 38 im Rücklauf 22 gemäß dem hier herrschenden Brennstoffdruck entsprechend geringer eingestellt wird. Herrscht hier beispielsweise ein Brennstoffdruck von 10 bar am Eingang 49 oder am Ausgang 51, wird z.B. in der Messkammer 54 durch entsprechende Einstellung der Druckerzeugungseinrichtung 150 ein geringer Prüfdruck von z.B. ca. 5 bar eingestellt. Interessant ist hier insbesondere die Dichtheitsprüfung in Richtung F, d.h. zu prüfen, dass kein Brennstoff aus dem Brennstoffpumpenrücklauf 30 zurück zu dem Brenner 12 fließen kann. Selbstverständlich kann man aber auch die Dichtheit in Richtung E messen. Hierzu dienen die entsprechend möglichen Auswerteergebnisse der Tabelle 2.

Einige interessante Aspekte der Erfindung werden im Folgenden noch einmal zusammengefasst:
Die Erfindung betrifft insbesondere eine - vorzugsweise automatische - Absperreinrichtungsprüfvorrichtung (40) zum Überprüfen der Dichtheit einer Absperreinrichtung (32) für flüssige Brennstoffe, wobei die Absperreinrichtung (32) einen Flüssigkeitsdurchgang (52) zwischen einem ersten Bereich und einem zweiten Bereich einer Flüssig-Brennstoffleitung für den mit einem Brennstoffdruck beaufschlagten flüssigen Brennstoff vorzugsweise automatisch sperrt oder öffnet,
wobei die Absperreinrichtungsprüfvorrichtung (40) umfasst:
   eine Messkammer (54), die in dem Flüssigkeitsdurchgang (52) zwischen der Absperreinrichtung (32) und einer vorzugsweise automatischen Schließeinrichtung (56) definiert ist und durch Schließen der Absperreinrichtung (32) von dem ersten Bereich und durch Schließen der Schließeinrichtung (56) von dem zweiten Bereich trennbar ist,
   eine Druckerzeugungseinrichtung (150), die an die Messkammer (54) zur Beaufschlagung von in der Messkammer (54) befindlichem Fluid mit einem Prüfdruck, der kleiner als der Brennstoffdruck ist, angeschlossen ist, und
   eine Druckerfassungseinrichtung (43) zur Erfassung einer Druckänderung in der Messkammer (54). Außerdem werden Verwendungen solcher Absperreinrichtungsprüfvorrichtungen beschrieben.

In bevorzugter Ausgestaltung vergleicht man eine weichdichtende Dichtstelle eines - z.B. ferngesteuert ansteuerbaren oder automatisch betätigbaren - Ventils mit einer Referenzdichtstelle, die deutlich dichter ausgeführt ist bzw. mit einem anderen Dichtungsprinzip - z.B. metallisch dichtend - funktioniert. Hierdurch kann man die Dichtheit des zu überprüfenden Ventils mit einer gut dichtenden Referenz vergleichen.

In einer bevorzugten Ausgestaltung wird ein spezielles Prüföl zur Dichtheitsmessung verwendet. Es wird ein Prüföl verwendet, das sich von dem durch das Ventil zu steuernden Fluid unterscheidet und insbesondere - im Vergleich z.B. zu Öl mit unterschiedlicher Qualität - definierte physikalische Eigenschaften - z.B. Kompressibilität, Ausdehnungskoeffizient, Viskosität und/oder Molekulargröße - aufweist.

### Bezugszeichenliste:

- 10: Ölfeuerungsanlage
- 12: Brenner
- 14: Düsenkopf
- 16: Brennstoffringleitung
- 18: erste Brennstoffleitung
- 20: Zulauf
- 22: zweite Brennstoffleitung
- 24: Rücklauf
- 26: Brennerpumpe
- 28: Brennerpumpenzulauf
- 30: Brennerpumpenablauf
- 32: Absperreinrichtung
- 34: erstes Magnetventil
- 38: zweites Magnetventil
- 40: Absperreinrichtungsprüfvorrichtung
- 41: Absperreinrichtungstesteinrichtung
- 42: Steuerung
- 43: Druckerfassungseinrichtung
- 44: Auswerteeinrichtung
- 46: Druckregler
- 48: erster Anschluss
- 49: Eingang
- 50: zweiter Anschluss
- 51: Ausgang
- 52: Flüssigkeitsdurchgang
- 54: Messkammer
- 56: Schließeinrichtung
- 58: Pumpe
- 60: Schließkolben
- 61: Prüfdruckpumpe
- 62: Druckmessgerät
- 64: vorgesteuertes Magnetventil
- 66: Ventilkolben
- 68: Ventilgehäuse
- 70: Ventilkörper
- 72: Ventilbetätigungsaufsatz
- 74: Ventilzylinder
- 76: Ventilsitz
- 77: Kanal
- 78: Drosselbohrung
- 80: Lastteil
- 81: Vorsteuerteil
- 82: Nebenpassage
- 84: Kern (Hubanker)
- 86: Magnetspule
- 88: Rückstellfeder
- 90: Vorsteuerventil
- 92: Ventilkolben-Rückstellfeder
- 94: Kammer oberhalb des Ventilkolbens
- 96: direktgesteuertes Magnetventil
- 98: Ventilkolben
- 100: Ventilsitz
- 102: Spule
- 104: Anker
- 106: Feder
- 108: gedämpfter Sitzteller
- 110: Ventilgehäuse
- 111: Ventilsteuerkopf
- 112: Tankrohr
- 114: Pumpengehäuse
- 116: Antriebsmotor
- 120: Zylinder
- 122: Druckkammer
- 124: Messraum
- 126: Ölspeicher
- 128: Druckregelventilanordnung
- 130: Durchgangskanal
- 132: erster Abschnitt
- 134: Kegelventil
- 136: Düse mit Bohrung
- 138: Tellerfeder
- 140: Kugel
- 142: Druckfeder
- 144: Schieber
- 146: zweiter Abschnitt
- 148: Druckregulierventil
- 150: Druckerzeugungseinrichtung
- 152: Druckanschluss
- 154: erste Dichtstelle
- 156: zweite Dichtstelle
- 160: Rückholfeder
- 161: metallische Dichtfläche
- 162: Weichdichtung
- 164: Druckfläche
- 168: Hydraulikanschluss
- 170: Entlüftungseinrichtung

## Patentansprüche

1. Absperreinrichtungsprüfvorrichtung (40) zum Überprüfen der Dichtheit einer Absperreinrichtung (32) für flüssige Brennstoffe, wobei die Absperreinrichtung (32) einen Flüssigkeitsdurchgang (52) zwischen einem ersten Bereich und einem zweiten Bereich einer Flüssig-Brennstoffleitung für den mit einem Brennstoffdruck beaufschlagten flüssigen Brennstoff sperrt oder öffnet,
wobei die Absperreinrichtungsprüfvorrichtung (40) umfasst:
eine Messkammer (54), die in dem Flüssigkeitsdurchgang (52) zwischen der Absperreinrichtung (32) und einer Schließeinrichtung (56) definiert ist und durch Schließen der Absperreinrichtung (32) von dem ersten Bereich und durch Schließen der Schließeinrichtung (56) von dem zweiten Bereich trennbar ist,
eine Druckerzeugungseinrichtung (150), die an die Messkammer (54) zur Beaufschlagung von in der Messkammer (54) befindlichem Fluid mit einem erhöhten Prüfdruck, der höher als der Umgebungsdruck und kleiner als der Brennstoffdruck ist, angeschlossen ist, und
eine Druckerfassungseinrichtung (43) zur Erfassung einer Druckänderung in der Messkammer (54),
**dadurch gekennzeichnet,**
**dass** die Messkammer (54) ein definiertes Messvolumen kleiner als 100 ml hat und
**dass** die Absperreinrichtung (32) ein Ventil (64, 96, 34, 38) mit einem Ventilkolben (66, 98) zum Verschließen der Messkammer (54) an einem ersten Ende umfasst und dass die Schließeinrichtung (56) ein Schließelement, insbesondere eine Schließmembran oder einen Schließkolben (60), zum Verschließen der Messkammer (54) an einem zweiten Ende umfasst.

2. Absperreinrichtungsprüfvorrichtung (40) nach Anspruch 1,
**gekennzeichnet durch** eine Auswerteeinrichtung (44), die dazu ausgebildet ist, ein Signal abzugeben, wenn die Druckerfassungseinrichtung (43) bei geschlossener Absperreinrichtung (32) und geschlossener Schließeinrichtung (56) eine Druckänderung erfasst, wobei die Auswerteeinrichtung (44) dazu ausgebildet ist, bei einem Druckanstieg in der Messkammer (54) ein erstes Signal und bei einem Druckabfall ein davon unterschiedliches zweites Signal zu erzeugen.

3. Absperreinrichtungsprüfvorrichtung (40) nach einem der voranstehenden Ansprüche, **dadurch gekennzeichnet,**
**dass** die Druckerzeugungseinrichtung (150) eine Pumpe (61; 58) zur Erhöhung des Drucks von innerhalb der Messkammer (54) befindlichen Fluids und/oder ein Druckreglerventil (148) zum Einleiten von unter Druck stehendem Fluid in die Messkammer (54), bis der Druck in der Messkammer (54) den Prüfdruck erreicht, umfasst.

4. Absperreinrichtungsprüfvorrichtung (40) nach einem der voranstehenden Ansprüche, **dadurch gekennzeichnet,**
**dass** das Schließelement, insbesondere der Schließkolben
a) mittels eines, vorzugsweise durch die Druckerzeugungseinrichtung (150) oder eine gesonderte Pumpe (58), unter Druck gesetzten Mediums betätigbar ist; und/oder
b) hydraulisch oder pneumatisch betätigbar ist und/oder
c) in seine Offenstellung vorgespannt ist, um bei Nicht-Betätigung der Schließeinrichtung stets offen zu sein; und/oder
e) elektromagnetisch betätigt ist.

5. Absperreinrichtungsprüfvorrichtung (40) nach einem der voranstehenden Ansprüche, **dadurch gekennzeichnet**,
5.1 dass das Schließelement eine Schließelement-Dichtung hat, die sich von der Art und Bauart von einer Dichtung des zu überprüfenden Ventils (64, 96, 34, 38) unterscheidet, und/oder
5.2 dass die Dichtwirkung des Schließelements unterschiedlich zu der Dichtwirkung des Ventils (64, 96, 34, 38) ist und/oder
5.3 dass die Materialpaarung am Schließbereich des Schließelements unterschiedlich zu der Materialpaarung am Schließbereich des zu überprüfenden Ventils ist und/oder
5.4 dass das Schließelement für eine bessere Dichtwirkung als das Ventil ausgelegt ist und/oder
5.5 dass das Schließelement eine Metalldichtung aufweist, während ein Dichtelement eines zu überprüfenden Ventils ein Elastomer aufweist oder zumindest teilweise aus Kunststoff oder Gummi gebildet ist, und/oder
5.6 dass das Schließelement mit einer höheren Stellkraft als das zu überprüfende Ventil verschließbar ist.

6. Absperreinrichtungsprüfvorrichtung (40) nach einem der voranstehenden Ansprüche, **dadurch gekennzeichnet,**
**dass** die Absperreinrichtung (32) ein Ventil (34, 38, 64, 96) mit einem Ventilgehäuse (110) ist, das mit einem ersten Anschluss (48) an den ersten Bereich und mit einem - vorzugsweise kollinear mit dem ersten Anschluss (48) angeordneten - zweiten Anschluss (50) an den zweiten Bereich anschließbar ist, wobei die Messkammer (54) in oder seitlich zu dem Ventilgehäuse (110) in Bezug auf die Fließrichtung durch wenigstens einen der Anschlüsse (48, 50) gesehen zwischen dem ersten (48) und dem zweiten Anschluss (50) angeordnet ist.

7. Absperreinrichtungsprüfvorrichtung (40) nach Anspruch 6,
**dadurch gekennzeichnet,**
**dass** die in Axialrichtung der kollinear angeordneten Anschlüsse (48, 50) im Bereich der Anschlüsse (48, 50) gemessene Länge des Ventilgehäuses (68) zwischen 20 und 300 mm und insbesondere zwischen 60 mm und 120 mm und mehr insbesondere zwischen 70 und 85 mm beträgt.

8. Apsperreinrichtungsprüfvorrichtung (40) nach einem der voranstehenden Ansprüche, **gekennzeichnet durch** eine Prüfölliefereinrichtung, z.B. ein Prüfölbehälter, zum Befüllen des Messvolumens mit einem gesonderten, sich von flüssigen Brennstoff unterscheidenden.

9. Kombination aus einer Absperreinrichtungsprüfvorrichtung (40) nach einem der voranstehenden Ansprüche mit einem Magnetventil (34, 38, 64, 96) als Absperreinrichtung (32) zur Nutzung in einer Ölfeuerungsanlage (10), insbesondere als Absperreinrichtung im Brennstoffzulauf oder Brennstoffablauf eines Brenners (12) der Ölfeuerungsanlage (10).

10. Ölfeuerungsanlage (10) mit einer Absperreinrichtungsprüfvorrichtung (40) nach einem der Ansprüche 1 bis 8.

11. Ölfeuerungsanlage (10) nach Anspruch 10, **gekennzeichnet durch** eine Steuerung (42), die dazu ausgebildet ist, vor einem Startvorgang eines Brenners (12) der Ölfeuerungsanlage (10) und/oder nach einem Ende eines Brennerbetriebs der Ölfeuerungsanlage (10) die Dichtheit einer Absperreinrichtung (32) in einer Ölleitung mittels der Absperreinrichtungsprüfvorrichtung (40) durchzuführen und bei Eingang eines eine Leckage anzeigenden Signals der Auswerteeinrichtung (44) ein Starten des Brenners (12) zu verhindern.

12. Prüfverfahren zur Überprüfen der Dichtheit einer Absperreinrichtung (32), die in einer Brennstoffleitung (18, 22) für flüssigen Brennstoff vorgesehen ist und mit einem ersten Anschluss (48) an einen ersten Bereich und mit einem zweiten Anschluss (50) an einen zweiten Bereich der Brennstoffleitung (18, 22) angeschlossen ist, wobei der Brennstoff in dem ersten Bereich mit einem Brennstoffdruck zu der Absperreinrichtung (32) geliefert wird und der zweite Bereich bei geöffneter Absperreinrichtung (32) zur Weiterleitung des Brennstoffes von der Absperreinrichtung (32) weg dient, mit den Schritten:
a) Vorsehen eines definierten Messvolumens zwischen dem ersten (48) und dem zweiten Anschluss (50),
b) Absperren des Messvolumens mit der Absperreinrichtung (32) einenends und mit einer Schließeinrichtung (56) anderenends,
c) Erzeugen eines gegenüber dem Umgebungsdruck erhöhten Prüfdrucks in dem definierten Messvolumen, der kleiner als der Brennstoffdruck ist,
d) Überwachen einer Druckänderung in dem Messvolumen,
e) Bewerten der Dichtheit anhand der erfassten Druckänderung,
**dadurch gekennzeichnet,**
**dass** Schritt a) Vorsehen eines definierten Messvolumens kleiner als ca. 100 ml umfasst, dass die Absperreinrichtung ein Ventil mit einem Ventilkolben zum Verschlissen der Messkammer umfasst und dass als Schließeinrichtung (56) kein weiteres Stellventil, sondern ein eigens für die Dichtheitsprüfung eines Ventils, vorzugsweise in dem gleichen Gehäuse, vorgesehenes Schließelement verwendet wird.

13. Prüfverfahren nach Anspruch 12,
**dadurch gekennzeichnet,**
**dass** Schritt a) Absperren des Messvolumens mittels der Absperreinrichtung (32) von dem ersten Bereich und Absperren des Messvolumens mittels der Schließeinrichtung (56) von dem zweiten Bereich umfasst, und
**dass** in Schritt e) bei einem Druckanstieg in dem Messvolumen eine Undichtigkeit im Bereich der Absperreinrichtung (32) festgestellt wird, bei einem Druckabfall eine Undichtigkeit im Bereich der Schließeinrichtung (56) festgestellt wird und bei keiner festgestellten Druckänderung eine Dichtheit der Absperreinrichtung (32) festgestellt wird.

14. Prüfverfahren nach Anspruch 12 oder 13,
**dadurch gekennzeichnet**,
14.1 dass an dem Schließelement eine Schließelement-Dichtung verwendet wird, die sich von der Art und Bauart von einer Dichtung des zu überprüfenden Ventils unterscheidet und/oder
14.2 dass die Dichtwirkung des Schließelements unterschiedlich zu der Dichtwirkung des Ventils eingestellt wird und/oder
14.3 dass eine die Materialpaarung am Schließbereich des Schließelements ausgewählt wird, die unterschiedlich zu der Materialpaarung am Schließbereich des zu überprüfenden Ventils ist und/oder
14.4 dass das Schließelement für eine bessere Dichtwirkung als das Ventil ausgelegt wird und/oder
14.5 dass an dem Schließelement eine Metalldichtung vorgesehen wird, wenn ein Dichtelement eines zu überprüfenden Ventils ein Elastomer einen Kunststoff oder ein Gummi aufweist und/oder
14.6 dass das Schließelement mit einer höheren Stellkraft als das zu überprüfende Ventil verschlossen wird und/oder
14.7 dass unterschiedliche Dichtstellen an dem Ventil überprüft werden.

15. Prüfverfahren nach einem der voranstehenden Ansprüche,
**dadurch gekennzeichnet,**
**dass** ein Dichtheitsvergleich wenigstens zweier Dichtstellen innerhalb einer vorgegebenen Prüfzeit erfolgt und/oder dass ein gesondertes Prüföl für die Dichtheitsprüfung verwendet wird.

## Claims

1. Device for testing a shut-off system (40) for checking the tightness of a shut-off device (32) for liquid fuels, the shut-off device (32) blocking or opening a liquid passage (52) between a first region and a second region of a liquid fuel line for liquid fuel to which a fuel pressure is applied,
the device for testing a shut-off system (40) comprising:
a measuring chamber (54) defined in said liquid passage (52) between said shut-off device (32) and a closing device (56) and separable from said first region by closing said shut-off device (32) and from said second region by closing said closing device (56),
a pressure generating device (150) connected to the measuring chamber (54) for applying an increased test pressure, which is higher than the ambient pressure and lower than the fuel pressure, to the liquid in the measuring chamber (54) and
a pressure detection means (43) for detecting a pressure variation in the measuring chamber (54),
**characterized in that**
the measuring chamber (54) has a defined measuring volume of less than 100 ml, and **in that** the shut-off device (32) comprises a valve (64, 96, 34, 38) with a valve piston (66, 98) for closing the measuring chamber (54) at one end, and **in that** the closing device (56) comprises a closing element, in particular a closing membrane or a closing piston (60) for closing the measuring chamber (54) at a second end.

2. Device for testing a shut-off system (40) according to claim 1, **characterized by** an evaluation device (44) arranged to provide a signal when the pressure detection means (43) detects a pressure change when the shut-off device (32) is closed and when the closing device (56) is closed, the evaluation device (44) being arranged to generate a first signal when the pressure inside the measuring chamber (54) increases and a second signal different from the first signal when the pressure decreases.

3. Device for testing a shut-off system (40) according to one of the preceding claims, **characterized in that** the pressure generating device (150) comprises a pump (61; 58) for increasing the pressure of a fluid inside the measuring chamber (54) and/or a pressure regulating valve (148) for introducing a pressurized fluid into the measuring chamber (54) until the pressure in the measuring chamber (54) reaches the test pressure.

4. Device for testing a shut-off system (40) according to one of the preceding claims, **characterized in that** the closing element, in particular the closing piston
a) can be operated by means of a medium which is preferably pressurized by the pressure generating device (150) or a separate pump (58); and/or
(b) is hydraulically or pneumatically operable; and/or
(c) is pre-loaded in its open position so that it is always open when the closing device is not in use; and/or
(e) is electromagnetically operated.

5. Device for testing a shut-off system (40) according to one of the preceding claims, **characterized in that**
5.1 the closing element has a closing element seal which differs in type and construction from a seal of the valve (64, 96, 34, 38) to be tested, and/or
5.2 **in that** the sealing effect of the closing element is different from the sealing effect of the valve (64, 96, 34, 38), and/or
5.3 **in that** the material pairing in the closing area of the closing element is different from the material pairing in the closing area of the valve to be closed, and/or
5.4 **in that** the closing element is designed to provide a better sealing than the valve, and/or
5.5 **in that** the closing element has a metal seal, while a sealing element of a valve to be tested has an elastomer or is at least partially made of plastic or rubber, and/or
5.6. **in that** the closing element can be closed with an actuating force greater than that of the valve under test.

6. Device for testing a shut-off system (40) according to one of the preceding claims, **characterized in that** the shut-off device (32) is a valve (34, 38, 64, 96) having a valve housing (110) connectable to the first region by a first connection (48) and to the second region by a second connection (50) preferably arranged in a collinear manner with the first connection (48), the measuring chamber (54) being arranged in or on the side of the valve housing (110) between the first (48) and the second connection (50) seen with respect to the direction of flow through at least one of the connections (48, 50).

7. Device for testing a shut-off system (40) according to claim 6, **characterized in that** the length of the valve housing (68) measured in the axial direction of the collinearly arranged connections (48, 50) in the region of the connections (48, 50) is between 20 and 300 mm and particularly between 60 mm and 120 mm and even more particularly between 70 and 85 mm.

8. Device for testing a shut-off system (40) according to one of the preceding claims, **characterized by** a test oil delivery device, e.g. a test oil container, for filling the measuring volume with a separate one different from the liquid fuel.

9. Combination of a device for testing a shut-off system (40) according to one of the preceding claims and a solenoid valve (34, 38, 64, 96) as a shut-off device (32) for use in an oil burning system (10), in particular as a shut-off device in the fuel inlet or fuel outlet of a burner (12) of the oil burning system (10).

10. Oil burning system (10) having a device for testing a shut-off system (40) according to one of the claims 1 to 8.

11. Oil burning system (10) according to claim 10, **characterized by** a control device (42) that is designed to carry out the tightness of a shut-off device (32) in an oil line by means of the device for gesting a shut-off system (40) before a starting operation of the burner (12) of the oil burning system (10) and/or after the end of a burner operation of the oil burning system (10) and to prevent the burner (12) from starting when a signal indicating a leakage is received from the evaluation device (44).

12. Test method for checking the tightness of a shut-off device (32) which is provided in a fuel line (18, 22) for liquid fuel and is connected by a first connection (48) to a first region and by a second connection (50) to a second region of the fuel line (18, 22), the fuel in the first region being supplied to the shut-off device (32) at a fuel pressure and the second region, when the shut-off device (32) is open, serving to pass on the fuel away from the shut-off device (32), the method comprising the steps:
a) providing a defined measuring volume between the first (48) and the second connection (50),
b) shutting off the measuring volume with the shut-off device (32) at one end and with a closing device (56) at the other end,
c) generating a test pressure in the defined measuring volume which is higher than the ambient pressure and which is lower than the fuel pressure,
d) monitoring a pressure change in the measuring volume,
e) evaluating the tightness based on the pressure change detected,
**characterized in that** step a) comprises the provision of a defined measuring volume smaller than approx. 100 ml, **in that** the shut-off device comprises a valve with a valve piston for closing the measuring chamber and **in that** no further control valve is used as closing device (56), but a closing element specifically provided for the tightness test of a valve, preferably in the same housing, is used.

13. Test method according to claim 12,
**characterized in that**
step a) comprises shutting off the measuring volume from the first region by means of the shut-off device (32) and shutting off the measuring volume from the second region by means of the closing device (56), and that in step e) a leakage in the region of the shut-off device (32) is detected in the event of a pressure rise in the measuring volume, a leakage in the region of the closing device (56) is detected in the event of a pressure drop, and tightness of the shut-off device (32) is detected in the event of no pressure change detected.

14. Test method according to claim 12 or 13,
**characterized in that**
14.1 a closing element seal is used on the closing element which differs from a seal of the valve under test in type and design and/or
14.2 the sealing effect of the closing element is set differently to the sealing effect of the valve and/or
14.3 a material pair is selected at the closing area of the closing element which is different from the material pair at the closing area of the valve under test and/or
14.4 the closing element is designed to provide a better sealing effect than the valve; and/or
14.5 a metal seal is provided on the closing element if a sealing element of a valve under test comprises an elastomer, plastic or rubber, and/or
14.6 the closing element is closed with a higher actuating force than the valve under test, and/or
14.7 different sealing points on the valve are tested.

15. Test method according to one of the preceding claims,
**characterized in that** a tightness comparison of at least two sealing points is carried out within a predetermined test time and/or **in that** a separate test oil is used for the tightness test.

## Revendications

1. Dispositif pour tester un dispositif d'arrêt (40) pour contrôler l'étanchéité d'un dispositif d'arrêt (32) pour combustibles liquides, le dispositif d'arrêt (32) bloquant ou ouvrant un passage de fluide (52) entre une première zone et une deuxième zone d'une conduite de combustible liquide pour le combustible liquide auquel une pression de combustible est appliquée, le dispositif pour tester un dispositif d'arrêt (40) comprenant:
une chambre de mesure (54) définie dans ledit passage de liquide (52) entre ledit dispositif d'arrêt (32) et un dispositif de fermeture (56) et séparable de ladite première zone par fermeture dudit dispositif d'arrêt (32) et de ladite seconde zone par fermeture dudit dispositif de fermeture (56),
un dispositif de génération de pression (150) relié à la chambre de mesure (54) pour appliquer une pression d'essai accrue, qui est supérieure à la pression ambiante et inférieure à la pression du carburant, au fluide situé dans la chambre de mesure (54) et
et un dispositif de détection de pression (43) pour détecter une variation de pression dans la chambre de mesure (54),
**caractérisé en ce que**
la chambre de mesure (54) présente un volume de mesure défini inférieur à 100 ml, et **en ce que** le dispositif d'arrêt (32) comprend une soupape (64, 96, 34, 38) avec un piston de soupape (66, 98) pour fermer la chambre de mesure (54) à une première extrémité, et **en ce que** le dispositif de fermeture (56) comprend un élément de fermeture, notamment une membrane de fermeture ou un piston de fermeture (60) pour fermer la chambre de mesure (54) à une seconde extrémité.

2. Dispositif pour tester un dispositif d'arrêt (40) selon la revendication 1, **caractérisé par** un dispositif d'évaluation (44) adapté pour délivrer un signal lorsque le moyen de détection de pression (43) détecte une variation de pression lorsque le dispositif d'arrêt (32) est fermé et lorsque le dispositif de fermeture (56) est fermé, le dispositif d'évaluation (44) étant adapté pour générer un premier signal lorsque la pression augmente et un deuxième signal différent du premier signal lorsque la pression diminue.

3. Dispositif pour tester un dispositif d'arrêt (40) selon l'une des revendications précédentes, **caractérisé en ce que** le dispositif de génération de pression (150) comprend une pompe (61; 58) pour augmenter la pression d'un fluide à l'intérieur de la chambre de mesure et/ou une soupape de régulation de pression (148) pour introduire un fluide sous pression dans la chambre de mesure (54) jusqu'à ce que la pression dans la chambre de mesure (54) atteigne la pression d'essai.

4. Dispositif pour tester un dispositif d'arrêt (40) selon l'une des revendications précédentes, **caractérisé en ce que** l'élément de fermeture, en particulier le piston de fermeture
a) peut être actionné au moyen d'un fluide qui est de préférence pressurisé par le dispositif de génération de pression (150) ou une pompe séparée (58); et/ou
b) est actionnable hydrauliquement ou pneumatiquement; et/ou
c) est préchargé en position ouverte de manière à être toujours ouvert lorsque le dispositif de fermeture n'est pas utilisé; et/ou
e) est à commande électromagnétique.

5. Dispositif pour tester un dispositif d'arrêt (40) selon l'une des revendications précédentes, **caractérisé en ce que**
5.1 l'élément de fermeture présente un joint d'étanchéité d'élément de fermeture qui diffère, par son type et sa construction, d'un joint de la soupape (64, 96, 34, 38) à tester, et/ou
5.2 **en ce que** l'effet d'étanchéité de l'élément de fermeture est différent de l'effet d'étanchéité de la soupape (64, 96, 34, 38), et/ou
5.3 **en ce que** l'appariement du matériau dans la zone de fermeture de l'élément de fermeture est différent de l'appariement du matériau dans la zone de fermeture de la soupape à fermer, et/ou
5.4 **en ce que** l'élément de fermeture est conçu pour assurer une meilleure étanchéité que la soupape, et/ou
5.5 **en ce que** l'élément de fermeture présente un joint métallique, tandis qu'un élément d'étanchéité d'une soupape à tester présente un élastomère ou est au moins partiellement constitué de plastique ou de caoutchouc, et/ou
5.6 **en ce que** l'élément de fermeture peut être fermé avec une force d'actionnement supérieure à celle de la soupape testée.

6. Dispositif pour tester un dispositif d'arrêt (40) selon l'une des revendications précédentes, **caractérisé en ce que** le dispositif d'arrêt (32) est une soupape (34, 38, 64, 96) ayant un boîtier de soupape (110) pouvant être relié à la première zone par un premier raccord (48) et à la seconde zone par un second raccord (50) de préférence disposé de manière collinéaire avec le premier raccord (48), la chambre de mesure (54) étant disposée dans ou sur le côté du boîtier de soupape (110) entre le premier (48) et le second raccord (50) vu par rapport à la direction du flux traversant au moins un des raccords (48, 50).

7. Dispositif pour tester un dispositif d'arrêt (40) selon la revendication 6, **caractérisé en ce que** la longueur du boîtier de soupape (68) mesurée dans la direction axiale des raccords (48, 50) disposés de manière collinéaire dans la région des raccords (48, 50) est comprise entre 20 et 300 mm et en particulier entre 60 et 120 mm et plus particulièrement entre 70 et 85 mm.

8. Dispositif pour tester un dispositif d'arrêt (40) selon l'une des revendications précédentes, **caractérisé par** un dispositif de livraison d'huile d'essai, par exemple un réservoir d'huile d'essai, pour remplir le volume de mesure avec un carburant séparé différent du carburant liquide.

9. Combinaison d'un dispositif pour tester un dispositif d'arrêt (40) selon l'une des revendications précédentes avec une électrovanne (34, 38, 64, 96) comme dispositif d'arrêt (32) destiné à être utilisé dans une installation de chauffage au mazout (10), en particulier comme dispositif d'arrêt dans l'entrée ou la sortie de combustible d'un brûleur (12) de l'installation de chauffage au mazout (10).

10. Installation de chauffage au mazout (10) comportant un dispositif pour tester un dispositif d'arrêt (40) selon l'une quelconque des revendications 1 à 8.

11. Installation de chauffage au mazout (10) selon la revendication 10, **caractérisée par** un système de commande (42) qui est conçu pour réaliser l'étanchéité d'un dispositif d'arrêt (32) dans une conduite de mazout au moyen du dispositif pour tester le dispositif d'arrêt (40) avant un processus de démarrage d'un brûleur (12) de l'installation de chauffage au mazout (10) et/ou après une fin du fonctionnement du brûleur de l'installation de chauffage au mazout (10) et pour empêcher le brûleur (12) de démarrer quand un signal indiquant une fuite est reçu du dispositif d'évaluation (44).

12. Procédé pour tester l'étanchéité d'un dispositif d'arrêt (32) prévu dans une conduite de combustible (18, 22) pour combustibles liquides et relié à une première zone avec un premier raccord (48) et à une seconde zone de la conduite de combustible (18, 22) avec un second raccord (50), le combustible dans la première zone étant délivré au dispositif d'arrêt (32) à une pression de combustible et la deuxième zone servant au passage du combustible à l'écart du dispositif d'arrêt (32) lorsque le dispositif d'arrêt est ouvert, le procédé comprenant les étapes :
a) fournir un volume de mesure défini entre le premier (48) et le second raccord (50),
b) l'arrêt du volume de mesure avec le dispositif d'arrêt (32) à une extrémité et avec un dispositif de fermeture (56) à l'autre extrémité,
c) génération d'une pression d'essai dans le volume de mesure défini qui est supérieure à la pression ambiante et qui est inférieure à la pression de combustible,
d) surveillance d'une variation de pression dans le volume de mesure,
e) évaluer l'étanchéité au moyen de la variation de pression détectée,
**caractérisé en ce que** l'étape a) comprend la fourniture d'un volume de mesure défini inférieur à environ 100 ml, **en ce que** le dispositif d'arrêt comprend une soupape avec un piston de soupape pour fermer la chambre de mesure et **en ce qu'**aucune autre soupape de commande n'est utilisée comme dispositif de fermeture (56), mais un élément de fermeture spécifiquement prévu pour le test d' étanchéité d'une soupape, de préférence dans le même boîtier, est utilisé.

13. Procédé de test selon la revendication 12,
**caractérisé en ce que**
l'étape a) comprend l'arrêt du volume de mesure de la première zone au moyen du dispositif d'arrêt (32) et l'arrêt du volume de mesure de la deuxième zone au moyen du dispositif de fermeture (56), et **en ce que** dans l'étape e) une fuite dans la zone du dispositif d'arrêt (32) est détectée en cas de montée en pression du volume de mesure, une fuite dans la zone du dispositif de fermeture (56) est détectée en cas de chute de pression et une étanchéité dans le dispositif d'arrêt (32) est détectée en l'absence de variation en pression.

14. Procédé de test selon la revendication 12 ou 13,
**caractérisé en ce que**
14.1 un joint d'étanchéité d'élément de fermeture est utilisé sur l'élément de fermeture qui diffère d'un joint d'étanchéité de la soupape soumise au test par son type et sa construction et/ou
14.2 l'effet d'étanchéité de l'élément de fermeture est réglé différemment de l'effet d'étanchéité de la soupape et/ou
14.3 une paire de matériaux est choisie dans la zone de fermeture de l'élément de fermeture qui est différente de la paire de matériaux dans la zone de fermeture de la soupape à tester et/ou
14.4 que l'élément de fermeture est conçu pour assurer une meilleure étanchéité que la soupape et/ou
14.5 un joint métallique est prévu sur l'élément de fermeture si un élément d'étanchéité d'une soupape à tester comprend un élastomère, un plastique ou un caoutchouc et/ou
14.6 l'élément de fermeture est fermé avec une force d'actionnement supérieure à celle de la soupape testée et/ou
14.7 des différents points d'étanchéité sur la soupape sont examinés.

15. Procédé de test selon l'une des revendications précédentes, **caractérisé en ce qu'**une comparaison d'étanchéité d'au moins deux points d'étanchéité est effectuée dans un temps de test prédéterminé et/ou **en ce qu'**une huile de test séparée est utilisée pour le test d'étanchéité.
